# EUROPEAN PATENT SPECIFICATION

(11) **EP 4 728 702 B1**
(45) Date of publication and mention of the grant of the patent: **28.10.2026**
(21) Application number: 24735171.1
(22) Date of filing: 17.06.2024
(51) Int. Cl.: H04L 9/40, G06N 20/00, H04L 41/16, H04W 12/06

(54) **AUTHORIZING MODEL RETRIEVAL VIA AN INTERMEDIARY**
AUTORISIERUNG DER MODELLAUFFINDUNG ÜBER EINE ZWISCHENSCHALTUNG
AUTORISATION DE RÉCUPÉRATION DE MODÈLE PAR UN INTERMÉDIAIRE

(30) Priority: 16.06.2023 WO PCT/CN2023/100740
(43) Date of publication of application: 22.04.2026
(73) Proprietor: Telefonaktiebolaget LM Ericsson (publ), 164 83 Stockholm (SE)
(72) Inventor: WANG, Cheng, Shanghai 200335 (CN)
(74) Representative: Ericsson
(86) International application number: PCT/EP2024/066769
(87) International publication number: WO 2024/256721

(56) References cited:
- "3rd Generation Partnership Project; Technical Specification Group Services and System Aspects; Study on security aspects of enablers for network automation for 5G phase 3; (Release 18)", no. V2.0.0, 6 June 2023 (2023-06-06), pages 1 - 68, XP052408887, Retrieved from the Internet <URL:https://ftp.3gpp.org/Specs/archive/33_series/33.738/33738-200.zip> [retrieved on 20230606]
- MIRKO CANO SOVERI ET AL: "living CR for eNA", vol. 3GPP SA 3, no. Berlin, DE; 20230522 - 20230526, 1 June 2023 (2023-06-01), XP052382279, Retrieved from the Internet <URL:https://www.3gpp.org/ftp/TSG_SA/WG3_Security/TSGS3_111_Berlin/Docs/S3-233266.zip> [retrieved on 20230601]
- CHRISTINE JOST ET AL: "New solution for KI#2 to support authorization of participant NWDAFs in FL", vol. 3GPP SA 3, no. Online; 20230116 - 20230120, 20 January 2023 (2023-01-20), XP052233519, Retrieved from the Internet <URL:https://www.3gpp.org/ftp/TSG_SA/WG3_Security/TSGS3_109AdHoc-e/Docs/S3-230443.zip> [retrieved on 20230120]

## Description

### TECHNICAL FIELD

The present application relates generally to the field of communication networks, and more specifically to techniques for securing machine learning (ML) models used to generate analytics in a communication network (e.g., a 5G core network), particularly when an intermediary network function (NF) needs to retrieve an ML model on behalf of a requesting NF.

### INTRODUCTION

Currently the fifth generation (5G) of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

At a high level, the 5G System (5GS) consists of an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

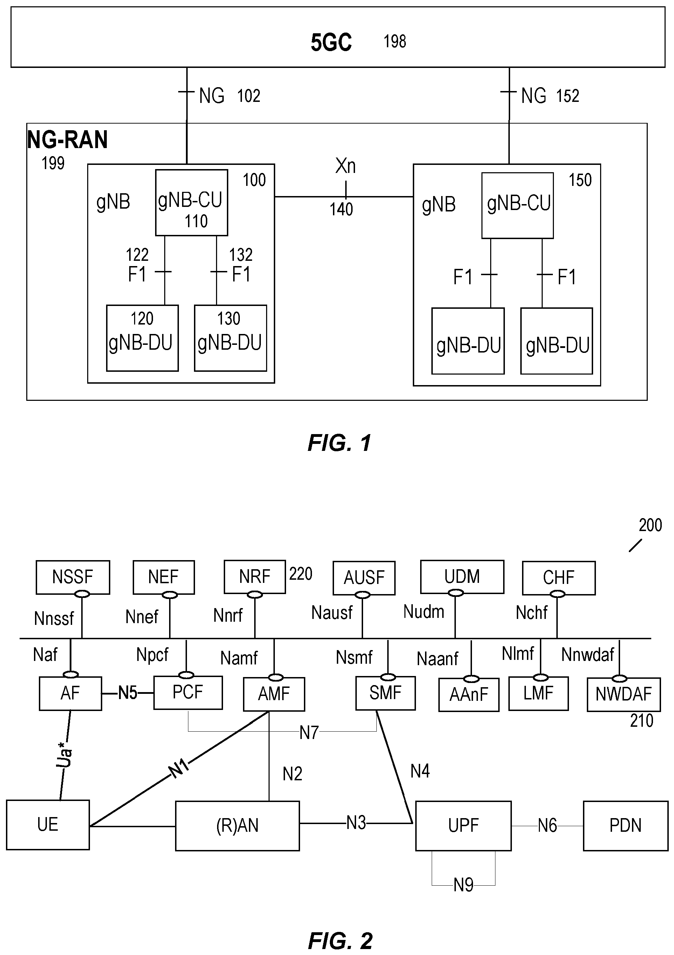

Figure 1 illustrates a high-level view of an exemplary 5G network architecture, consisting of a Next Generation Radio Access Network (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one more cells and, in some cases, can also use various directional beams to provide coverage in the respective cells.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG RAN logical nodes shown in Figure 1 include a Central Unit (CU or gNB-CU) and one or more Distributed Units (DU or gNB-DU). For example, gNB 100 includes gNB-CU 110 and gNB-DUs 120 and 130. CUs (*e.g.,* gNB-CU 110) are logical nodes that host higher-layer protocols and perform various gNB functions such controlling the operation of DUs. A DU (*e.g.,* gNB-DUs 120, 130) is a decentralized logical node that hosts lower layer protocols and can include, depending on the functional split option, various subsets of the gNB functions.

A gNB-CU connects to one or more gNB-DUs over respective F1 logical interfaces, such as interfaces 122 and 132 shown in Figure 1. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Another change in 5G networks (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services.

Furthermore, the services are composed of various "service operations", which are more granular divisions of the overall service functionality. The interactions between service consumers and producers can be of the type "request/response" or "subscribe/notify". In the 5G SBA, network repository functions (NRF) allow every network function to discover the services offered by other network functions, and Data Storage Functions (DSF) allow every network function to store its context. This 5G SBA model is based on principles including modularity, reusability and self-containment of NFs, which can enable network deployments to take advantage of the latest virtualization and software technologies.

A 5GC NF that is of particular interest in the present disclosure is the Network Data Analytics Function (NWDAF). This NF provides network analytics information (e.g., statistical information of past events and/or predictive information) to other NFs on a network slice instance level. The NWDAF can collect data from any 5GC NF. Note that a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice.

Machine learning (ML) is a type of artificial intelligence (AI) that focuses on the use of data and algorithms to imitate the way that humans learn, gradually improving accuracy as more data becomes available. ML algorithms build models based on sample (or "training") data, with the models being used subsequently to make predictions or decisions. ML algorithms can be used in a wide variety of applications (e.g., medicine, email filtering, speech recognition, etc.) in which it is difficult or unfeasible to develop conventional algorithms to perform the needed tasks. A subset of ML is closely related to computational statistics.

Traditionally, AI models were stored on cloud-based servers together with training data. In contrast, federated learning (FL, also known as collaborative learning) trains an ML model across multiple decentralized edge devices holding local data samples, without exchanging the training data among the devices. Edge devices (e.g., clients) train their respective copies of the model using their own local data, and then send parameters/weights from their locally trained models to a master device (e.g., server) that aggregates the parameters and updates the global ML model.

3GPP TS 23.288 (v18.1.0) specifies that NWDAF is the main NF for computing analytics based on ML models, and classifies NWDAF into two sub-functions (or logical functions): Analytics Logical Function (AnLF), which performs analytics procedures; and Model Training Logical Function (MTLF), which performs training and retraining of ML models used by the AnLF. 3GPP TS 23.288 (v18.1.0) section 6.2C.2.2 also specifies a procedure for FL among multiple NWDAF instances, while 3GPP TS 33.501 (v18.1.0) specifies security for ML model sharing (e.g., for FL) among multiple NWDAF instances.

An NWDAF(MTLF) determines to train an ML model based on local configuration or based on a request from an NWDAF(AnLF). The NWDAF(MTLF) also determines whether the ML model should be trained via FL mechanism. If the NWDAF(MTLF) determines to train an ML model based on local configuration and the FL mechanism is required, but the NWDAF(MTLF) can't act as a FL server, the NWDAF(MTLF) should discover an FL server NWDAF and request the FL server NWDAF to provide the trained ML model. However, it is unclear how to authorize the NWDAF(MTLF) to request the FL trained model on behalf of the NWDAF(AnLF) that originally initiated the request.

### SUMMARY

An object of embodiments of the present disclosure is to address these and other problems, issues, and/or difficulties, thereby facilitating the otherwise-advantageous deployment of federated learning for network analytics in communication networks (e.g., 5GC).

Some embodiments of the present disclosure include methods (e.g., procedures) for a consumer NF (NFc) of a communication network (e.g., 5GC).

These exemplary methods include obtaining, from a network repository function (NRF) of the communication network, a first access token that grants the NFc access to a machine learning (ML) model associated with an analytics identifier (ID). These exemplary methods also include sending, to a first network function (NF) of the communication network, a request for the ML model, wherein the request includes the first access token, the analytics ID associated with the ML model, and a vendor ID associated with the NFc. These exemplary methods also include receiving, from the first NF or a second NF of the communication network, information identifying or describing the ML model.

Other embodiments include exemplary methods (e.g., procedures) for a first NF of a communication network (e.g., 5GC).

These exemplary methods include receiving, from a consumer network function (NFc) of the communication network, a first request for an ML model. The first request includes an analytics ID associated with the ML model, a vendor ID associated with the NFc, and a first access token that grants the NFc access to the ML model. These exemplary methods also include authorizing the NFc to access the ML model based on verifying that the analytics ID is included in the first access token. These exemplary methods also include, based on the analytics ID, determining that the ML model needs to be obtained from a second NF of the communication network. These exemplary methods also include obtaining, from a network repository function (NRF) of the communication network, a second access token that authorizes the first NF to obtain the ML model from the second NF on behalf of the NFc.

Other embodiments include exemplary methods (e.g., procedures) for a second NF of a communication network (e.g., 5GC).

These exemplary methods include receiving, from a first NF of the communication network, a request for a machine learning (ML) model owned and/or controlled by the second NF. The request includes a second access token and an analytics identifier (ID) associated with the ML model. These exemplary methods also include, based on the second access token, authorizing the first NF to access the ML model on behalf of the NFc. These exemplary methods also include, based on the authorization, sending to the first NF or to the NFc information identifying or describing the ML model.

In some embodiments, the second NF is configured to operate as a federated learning (FL) server and these exemplary methods also include initiating FL training of the ML model by a plurality of third NFs configured to operate as FL clients. In such case, the information identifying or describing the ML model is sent after FL training of the ML model is completed.

Other embodiments include methods (*e.g.,* procedures) for an NRF of a communication network (e.g., 5GC).

These exemplary methods can include providing, to a first network function (NF) of the communication network, a second access token that authorizes the first NF to obtain a machine learning (ML) model from a second NF on behalf of a consumer network function (NFc) of the communication network, wherein the ML model associated with an analytics identifier (ID).

In some embodiments, these exemplary methods also include, before providing the second access token, providing to the NFc a first access token that grants the NFc access to the ML model associated with the analytics ID.

The following summary of certain aspects applies to various method embodiments described above.

In some embodiments, the ML model is owned and/or controlled by the second NF. In some embodiments, the NFc is an analytics logical function of a network data analytics function (NWDAF AnLF), the first NF is a model training logical function of a network data analytics function (NWDAF MTLF), and the second NF is an NWDAF MTLF different from the first NF.

In some embodiments, the first access token includes one or more of the following: the analytics ID, an NF instance ID associated with the NRF, an NF instance ID associated with the NFc, an NF type associated with the first NF, and an expected name of a model retrieval service provided by the first NF.

In some embodiments, the second access token includes the following: the analytics ID, an NF Instance ID associated with the first NF, and an NF Instance ID associated with the NFc. In some of these embodiments, the second access token also includes one or more of the following: an NF instance ID associated with the NRF, an NF type associated with the second NF, and an expected name of a model retrieval service provided by the second NF.

In some embodiments, the information identifying or describing the ML model comprising an identifier of a location from which the ML model can be obtained, wherein the identifier is one of the following: a URL; a fully qualified domain name (FQDN); or an identifier of an analytics data repository function (ADRF) that stores the ML model and one of the following: an ML model identifier, or an ML model storage transaction identifier.

Other embodiments include NFs (e.g., NWDAFs, NRFs) or network nodes hosting such NFs that are configured to perform the operations corresponding to any of the exemplary methods described herein. Other embodiments also include non-transitory, computer-readable media storing computer-executable instructions that, when executed by processing circuitry, configure such NFs or network nodes to perform operations corresponding to any of the exemplary methods described herein.

These and other disclosed embodiments can enable an intermediate NF (e.g., NWDAF MTLF) to obtain an FL-trained ML model requested by an originating NF, and can prevent unauthorized intermediate NFs from doing so. In this manner, embodiments can prevent exposure of confidential and/or sensitive ML models to unauthorized parties during FL, and can prevent security risks to NFs that are capable of participating in FL. Accordingly, embodiments improve the security of and thereby facilitate deployment of FL in a multi-vendor communication network, such as 5GC.

These and other objects, features, and advantages of the present disclosure will become apparent upon reading the following Detailed Description in view of the Drawings briefly described below.

### BRIEF DESCRIPTION OF THE DRAWINGS

Figures 1-2 illustrate various aspects of an exemplary 5G network architecture.
Figure 3 shows a signaling diagram of a procedure for FL among multiple NWDAF instances.
Figure 4 illustrates a procedure for token-based FL authorization for selecting participant NWDAF instances.
Figure 5 shows a signaling diagram of a procedure involving authorization of ML model retrieval via an intermediate NF, according to some embodiments of the present disclosure.
Figure 6 shows an exemplary method (*e.g.,* procedure) for a consumer NF of a communication network, according to various embodiments of the present disclosure.
Figure 7 shows an exemplary method (*e.g.,* procedure) for a first NF of a communication network, according to various embodiments of the present disclosure.
Figure 8 shows an exemplary method *(*e.g., procedure) for a second NF of a communication network, according to various embodiments of the present disclosure.
Figure 9 shows an exemplary method (*e.g.,* procedure) for an NRF of a communication network, according to various embodiments of the present disclosure.
Figure 10 shows a communication system according to various embodiments of the present disclosure.
Figure 11 shows a UE according to various embodiments of the present disclosure.
Figure 12 shows a network node according to various embodiments of the present disclosure.
Figure 13 shows host computing system according to various embodiments of the present disclosure.
Figure 14 is a block diagram of a virtualization environment in which functions implemented by some embodiments of the present disclosure may be virtualized.
Figure 15 illustrates communication between a host computing system, a network node, and a UE via multiple connections, according to various embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided as examples to convey the scope of the subject matter to those skilled in the art.

In general, all terms used herein are to be interpreted according to their ordinary meaning to a person of ordinary skill in the relevant technical field, unless a different meaning is expressly defined and/or implied from the context of use. All references to a/an/the element, apparatus, component, means, step, *etc.* are to be interpreted openly as referring to at least one instance of the element, apparatus, component, means, step, *etc.,* unless explicitly stated otherwise or clearly implied from the context of use. The operations of any methods and/or procedures disclosed herein do not have to be performed in the exact order disclosed, unless an operation is explicitly described as following or preceding another operation and/or where it is implicit that an operation must follow or precede another operation. Any feature of any embodiment disclosed herein can apply to any other disclosed embodiment, as appropriate. Likewise, any advantage of any embodiment described herein can apply to any other disclosed embodiment, as appropriate.

Furthermore, one or more of the following terms may be used in the description:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), base station distributed components (*e.g.,* CU and DU), a high-power or macro base station, a low-power base station (*e.g.,* micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), etc. A core network node can also be a node that implements a particular core network function (NF), such as an access and mobility management function (AMF), a session management function (SMF), a user plane function (UPF), a Service Capability Exposure Function (SCEF), or the like.
- Wireless Device: As used herein, a "wireless device" (or "WD" for short) is any type of device that is capable, configured, arranged and/or operable to communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with the term "user equipment" (or "UE" for short), with both of these terms having a different meaning than the term "network node".
- Radio Node: As used herein, a "radio node" can be either a "radio access node" (or equivalent term) or a "wireless device."
- Network Node: As used herein, a "network node" is any node that is either part of the radio access network (*e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Node: As used herein, the term "node" (without prefix) can be any type of node that can in or with a wireless network (including RAN and/or core network), including a radio access node (or equivalent term), core network node, or wireless device. However, the term "node" may be limited to a particular type (e.g., radio access node) based on its specific characteristics in any given context.

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

Figure 2 shows an exemplary non-roaming reference architecture for a 5GC (200), with service-based interfaces and various 3GPP-defined NFs within the Control Plane (CP). These include the following:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF, 220) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Network Data Analytics Function (NWDAF, 210) with Nnwdaf interface, described in more detail above and below.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NG RAN.

The Unified Data Management (UDM) function supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition to the UDM, the UDR supports storage and retrieval of policy data by the PCF, as well as storage and retrieval of application data by NEF.

The NRF allows every NF to discover the services offered by other NFs, and Data Storage Functions (DSF) allow every NF to store its context. In addition, the NEF provides exposure of capabilities and events of the 5GC to AFs within and outside of the 5GC. For example, NEF provides a service that allows an AF to provision specific subscription data (e.g., expected UE behavior) for various UEs.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol (N1 interface in Figure 2). Security for the communications over this these strata is provided by the NAS protocol (for NAS) and the PDCP protocol (for AS).

3GPP Rel-17 enhances the SBA by adding a Data Management Framework that includes a Data Collection Coordination Function (DCCF) and a Messaging Framework Adaptor Function (MFAF), which are defined in detail in 3GPP TR 23.700-91 (v17.0.0). The Data Management Framework is backward compatible with a Rel-16 NWDAF function, described above. For Rel-17, the baseline for services offered by the DCCF (e.g., to an NWDAF) are the Rel-16 NF Services used to obtain data. For example, the baseline for the DCCF service used by an NWDAF consumer to obtain UE mobility data is *Namf_EventExposure.*

As briefly mentioned above, machine learning (ML) is a type of artificial intelligence (AI) that focuses on the use of data and algorithms to imitate the way that humans learn, gradually improving accuracy as more data becomes available. ML algorithms build models based on sample (or "training") data, with the models being used subsequently to make predictions or decisions. ML models can be used in a wide variety of applications (e.g., medicine, email filtering, speech recognition, etc.) in which it is difficult or unfeasible to develop conventional algorithms to perform the needed tasks.

3GPP TS 23.288 (v18.1.0) specifies that NWDAF is the main NF for computing analytics based on ML models and classifies NWDAF into two sub-functions (or logical functions): Analytics Logical Function (AnLF), which performs analytics procedures; and Model Training Logical Function (MTLF), which performs training and retraining of ML models used by the AnLF. In the following description, the terms "AnLF", "NWDAF AnLF", "NWDAF containing AnLF", and "NWDAF(AnLF)" are used interchangeably. Likewise, the terms "MTLF", "NWDAF MTLF", "NWDAF containing MTLF", and "NWDAF(MTLF)" are used interchangeably.

3GPP TS 23.288 (v18.1.0) specifies a subscribe/notify procedure for a consumer NF to retrieve ML model(s) associated with one or more Analytics IDs whenever a new ML model has been trained by the NWDAF MTLF and becomes available. This is referred to as ML Model Provisioning and is implemented by the *Nnwdaf_MLModelProvision* service.

Traditionally, ML models were trained on cloud-based servers that also stored the training data. In contrast, federated learning (FL, also known as collaborative learning) trains an ML model across multiple decentralized edge devices holding local data samples, without exchanging the training data among the devices. The edge devices (e.g., clients) train their respective copies of the model using their own local data, and then send parameters/weights from their locally trained models to a master device (e.g., server) that aggregates the parameters and updates the global ML model.

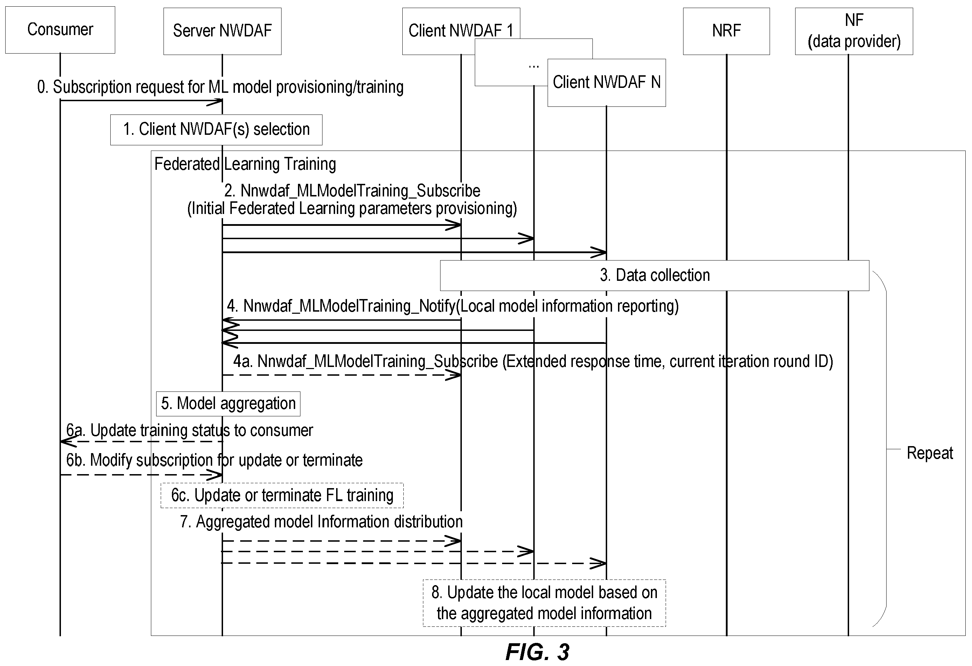

Figure 3 show a signaling diagram of a procedure for FL among multiple NWDAF instances, as further described in 3GPP TS 23.288 (v18.1.0) section 6.2C.2.2. The procedure involves a consumer (e.g., NWDAF AnLF or NWDAF MTLF), a FL server NWDAF, N client NWDAFs, an NRF, and a data producer NF. The numbered operations shown in Figure 3 are described below, with reference to various clauses or sections of 3GPP TS 23.288.

In operation 0, which can be considered a pre-condition, the sends a subscription request to the FL server NWDAF to retrieve an ML model, using Nnwdaf_MLModelProvision service as defined in clause 7.5 including Analytics ID, ML model metric (e.g., ML model Accuracy), accuracy reporting interval, and pre-determined status (ML model Accuracy threshold or Time when the ML model is needed). Note that the ML model Accuracy threshold can be used to indicate the target ML Model Accuracy of the training process, and the FL server NWDAF may stop the training process when the ML model Accuracy threshold is achieved during the training process. If the consumer provides the Time when the ML model is needed, the FL Server NWDAF can take this information into account to decide the maximum response time for its FL client NWDAF(s).

In operation 1, the FL Server NWDAF selects FL Client NWDAF(s), i.e., NWDAF(s) containing MTLF, as further described in clause 6.2C.2.1. In operation 2, the FL Server NWDAF sends a Nnwdaf_MLModelTraining_Subscribe or Nnwdaf_MLModelTrainingInfo_Request to the selected FL Client NWDAF(s) that participate in the FL to perform the local model training and determine the interim local ML model information based on the input parameter in the request from FL Server NWDAF, including ML model metric and initial ML model. The request also includes the maximum response time before which the FL Client NWDAF has to report the interim local ML model information to the FL Server NWDAF.

In operation 3, when any of the FL client NWDAF(s) do not have available local data, these FL Client NWDAF(s) collect their local data by using the mechanism specified in clause 6.2. In operation 4, during the FL training procedure, each FL Client NWDAF further trains the ML model provided by the FL Server NWDAF based on its own data and reports the interim local ML model information to the FL Server NWDAF in Nnwdaf_MLModelTraining_Notify or Nnwdaf_MLModelTrainingInfo_Response. This message may also include a local ML model metric computed by the FL Client NWDAF as well as training input data information (e.g., areas covered by the data set, sampling ratio, maximum/minimum of value of each dimension of data, etc.). In general, the parameters representing characteristics of local training dataset are implementation specific.

The ML model, which is sent from the FL Client NWDAF(s) to the FL Server NWDAF during the FL training process, is the information needed by the FL Server NWDAF to build the aggregated model based on the locally trained ML model(s). If the FL Client NWDAF is not able to complete the training of the interim local ML model within the maximum response time provided by the FL Server NWDAF, the FL Client NWDAF sends the FL Server NWDAF a Delay Event Notification that includes the delay event indication, an optional cause code (e.g., local ML model training failure, more time necessary for local ML model training), and the expected time to complete the training (if available). This notification is sent before the maximum response time elapses.

In operation 4a, if the FL server NWDAF receives notification/response that an FL Client NWDAF is not able to complete the training within the maximum response time, the FL Server NWDAF may send to the FL Client NWDAF an extended maximum response time in Nnwdaf_MLModelTraining_Subscribe or Nnwdaf_ MLModelTrainingInfo_Request. This time indicates the latest time for the FL Client NWDAF to report the interim local ML model information to the FL Server NWDAF. Alternately, the FL server NWDAF may indicate FL Client NWDAF to skip reporting for this iteration. The FL server NWDAF includes the current iteration round ID in the message to indicate that the request is to modify the training parameters of the current iteration round. Alternately, the FL Server NWDAF may inform the FL Client NWDAF to cease the ML model training by sending termination request and to report back the current local ML model updates.

In operation 5, the FL Server NWDAF aggregates all local ML model information retrieved during operation 4 and uses the aggregated information to update the global ML model. The FL Server NWDAF may also compute the global ML model metric, e.g., based on the local ML model metric(s) or by applying the global model on the validation dataset (if available). The FL Server NWDAF may update the global ML model each time a FL Client NWDAF provides updated local ML model information; alternately, the FL Server NWDAF may wait for local ML model information from all FL Client NWDAFs before updating the global ML model.

If the FL Server NWDAF provides the maximum response time for the FL Client NWDAF(s) to provide the interim local ML model information in operation 2, or the extended maximum response time in operation 4a, the FL Server NWDAF decides either to wait for the FL Client NWDAF(s) which have not yet provided their interim local ML model within the (extended) maximum response time or aggregates only the retrieved local ML model information instances to update global ML model. The FL Server NWDAF makes this decision, considering the notification/response from the FL Client NWDAF or, if the notification is not received, based on local configuration.

In operation 6a, which is optional and based on the consumer request in operation 0, the FL Server NWDAF sends a Nnwdaf_MLModelProvision_Notify message to update the global ML model metric to the consumer periodically (e.g., every number of training rounds or every number of minutes) or dynamically when some pre-determined status is achieved (e.g., ML model accuracy reaches a threshold, training time expires, etc.).

In operation 6b, which is optional, the consumer decides whether the current ML model can fulfil the requirement, e.g., global ML model metric is satisfactory for the consumer and determines to stop or continue the training process. The consumer re-invokes Nnwdaf_MLModelProvision_Subscribe service operation as used in step 0 to stop or continue the training process.

In operation 6c, which is optional and based on the subscription request sent from the consumer in operation 6b, the FL Server NWDAF updates or terminates the current FL training process. If the FL Server NWDAF received a request in operation 6b to stop the Federated Training process, operations 7-8 are skipped or omitted.

In operation 7, if the FL procedure continues, the FL Server NWDAF determines FL Client NWDAF(s) as described in clause 6.2C.2.2 and sends Nnwdaf_MLModelTraining_Subscribe or Nnwdaf_MLModelTrainingInfo_Request that includes the aggregated ML model information to selected FL Client NWDAF(s) for next round of FL training. In operation 8, each FL Client NWDAF updates its own ML model based on the aggregated ML model information distributed by the FL Server NWDAF at operation 7. Note that operations 3-8 can be repeated until the training termination condition (e.g., maximum number of iterations, result of loss function is lower than a threshold, etc.) is reached.

When the FL training procedure is complete, the FL Server NWDAF requests the FL client NWDAF(s) to terminate the FL procedure by invoking Nnwdaf_MLModelTraining_Unsubscribe service with a cause code that the FL process has finished and (optionally) final aggregated ML model information. The FL client NWDAF(s) then terminate the local model training; if the final aggregated ML model information is received from the FL server NWDAF, the FL client NWDAF(s) can store it for further use. After the training process is complete, the FL Server NWDAF may send Nnwdaf_MLModelProvision_Notify that includes the globally optimal ML model information to the consumer.

3GPP TS 23.388 (v18.1.0), as modified by a change request in 3GPP document S2-2308072, explains that an NWDAF (MTLF) determines to train an ML model based on local configuration or based on a request from an NWDAF(AnLF). The NWDAF(MTLF) also determines whether the ML model should be trained via FL mechanism based on Analytic ID, Service Area/DNAI or data that cannot be obtained directly from a data producer NF (e.g., due to data privacy, data security). The NWDAF (AnLF) is generally not aware of whether the ML model is trained based on FL.

If the NWDAF(MTLF) can act as an FL server for the ML model training, then FL procedure is directly initiated by the NWDAF(MTLF) as FL server NWDAF. Alternately, if the NWDAF(MTLF) determines to train an ML model based on local configuration and FL, but the NWDAF(MTLF) can't act as a FL server, the NWDAF(MTLF) should discover an FL server NWDAF as described in 3GPP TS 23.288 section 5.2 and request the FL server NWDAF to provide the trained ML model, as illustrated in Figure 3. The FL server NWDAF may determine to initiate FL procedure before providing the ML model.

Alternately, if the ML model training is triggered by a request from NWDAF(AnLF) and the NWDAF(MTLF) determines that FL is required but it cannot act as an FL server, the NWDAF(MTLF) should discover an FL server NWDAF as described in 3GPP TS 23.288 section 5.2 and request the FL server NWDAF to provide the trained ML model, as illustrated in Figure 3. The subscription endpoint address of the NWDAF (AnLF) is provided in the request message sent to the FL server NWDAF. The FL server NWDAF may determine to initiate FL procedure before providing the ML model. The FL server NWDAF sends the ML model information to the notification endpoint (e.g., NWDAF AnLF) after the ML model training success.

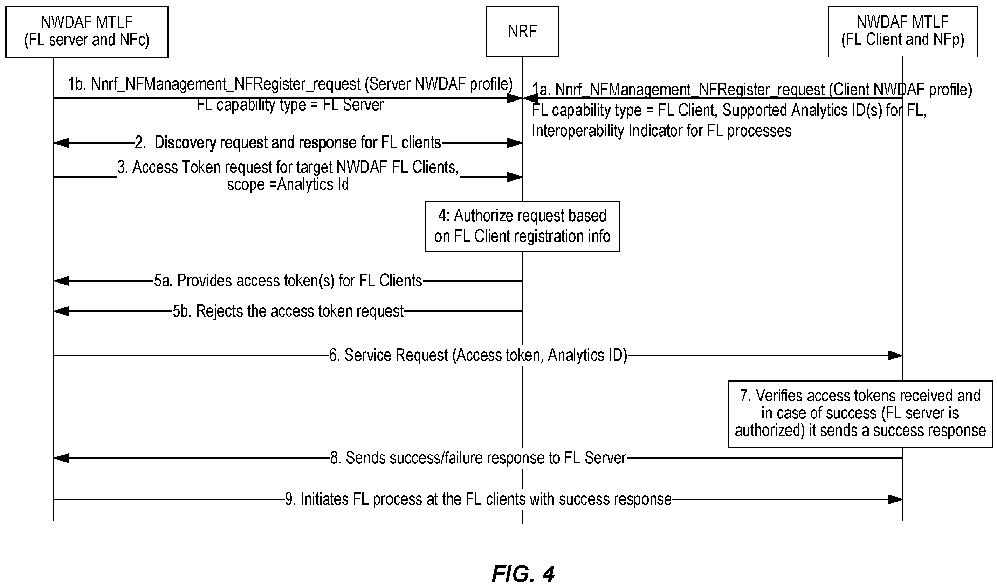

3GPP TS 33.501 (v18.1.0) section X.9 describes a security procedure for FL, which is illustrated by the signaling diagram shown in Figure 4. More specifically, Figure 4 illustrates a procedure for token-based FL authorization for selecting participant NWDAF instances. This procedure is between an NWDAF MTLF acting as FL server and consumer NF (NFc), an NWDAF MTLF acting as FL client and producer NF (NFp), and an NRF. The authorization is based upon the FL capability type (FL server or FL client) provided by the NWDAF MTLF acting as FL server during registration, and the Analytics ID and Interoperability Indicator per Analytics ID provided by the NWDAF MTLF acting as FL client during registration. The numbered operations shown in Figure 4 are described below, with reference to various clauses or sections of 3GPP TS 33.501.

In operation 1a, the NWDAF MTLF acting as FL client registers to the NRF with its FL related information, including supported FL capability (FL client), Analytics ID(s) and Interoperability Indicator per Analytics ID as described in 3GPP TS 23.288 (v18.1.0) clause 5.2. In operation 1b, the NWDAF MTLF acting as FL server registers to the NRF with its FL capability (FL Server).

In operation 2, the NWDAF MTLF acting as FL server (NFc) sends a discovery request to NRF and receives the available NWDAF MTLFs acting as FL client(s) (NFp) as a response, as specified in 3GPP TS 23.288 (v18.1.0) clause 6.2C.2.1. In operation 3, the NWDAF MTLF acting as FL server (NFc) sends an access token request to the NRF as specified in 3GPP TS 33.501 (v18.1.0) clause 13.4.1. The access token request may contain the Analytics ID for the requested Federated Learning process.

In operation 4, the NRF authorizes the NWDAF MTLF acting as FL server (NFc) based upon the information received in operation 1a, and after verifying that the FL server NWDAF's Vendor ID is included in the Interoperability Indicator for the requested Analytics ID provided in operation 1b. If the authorization succeeds, NRF generates the access token(s) as specified in 3GPP TS 33.501 (v18.1.0) clause 13.4.1. The access token claims may include the Analytics ID for the request Federated Learning process.

In operations 5a-b, the NRF sends the access token to the NWDAF MTLF acting as FL Server, or rejects the request in case of failed authorization, as described in 3GPP TS 33.501 (v18.1.0) clause 13.4.1. In operation 6, the NWDAF MTLF acting as FL server sends the service request to the NWDAF MTLF(s) acting as FL client with the access token received in operation 5a along with the Analytics ID information for which the FL process is to be performed, as described in 3GPP TS 23.288 (v18.1.0).

In operations 7-8, the NWDAF MTLF acting as FL client (NFp) verifies the received access token as specified in 3GPP TS 33.501 (v18.1.0) clause 13.4.1. In case of successful access token verification, the NWDAF MTLF acting as FL client sends a success response to the NWDAF MTLF acting as FL server, as described in 3GPP TS 23.288 (v18.1.0). In operation 9, after a successful response from the NWDAF MTLF(s) acting as FL client, the NWDAF MTLF acting as FL server initiates the Federated Learning process as described in 3GPP TS 23.288 (v18.1.0).

Note that in the above procedure, authorization of the NWDAF MTLF acting as FL client is implicit, since it can join a FL group only when selected by the NWDAF MTLF acting as FL server. This is in contrast to the above-described scenario in which ML model training is triggered by a request from NWDAF AnLF to NWDAF MTLF, which then must request the FL trained model from another NWDAF MTLF acting as FL server. It is currently unclear how to authorize the requesting NWDAF MTLF to obtain the FL-trained model on behalf of the originating NWDAF AnLF.

Embodiments of the present disclosure address these and other problems, issues, and/or difficulties by techniques whereby an NWDAF MTLF request an ML model (e.g., FL trained) from another NWDAF MTLF (e.g., FL server) on behalf of an NWDAF AnLF, authorization for retrieving the ML model is performed with respect to both the intermediate requesting NWDAF MTLF and the original requesting (or originating) NWDAF AnLF.

More specifically, in various embodiments, a model owner NF (e.g., NWDAF MTLF acting as FL server ) authorizes transfer and retrieval of its (owned) ML Model (e.g., FL trained) by an original requesting NF (e.g. NWDAF AnLF) via a request from an intermediate NF, which can be an NWDAF MTLF or any other NF as appropriate. NRF grants a token authorizing the intermediate requesting NF (e.g., NWDAF MTLF) to request the ML model (e.g., FL trained) on behalf of the original requesting NF (e.g. NWDAF AnLF), from the model owner NF (e.g. NWDAF MTLF acting as FL server). The token-based authorization is performed by verifying NF type (e.g. NWDAF), Analytics or ML capability (e.g. NWDAF AnLF or NWDAF MTLF), and vendor IDs of intermediate requesting NF and original requesting NF, based on an authorization profile (including an interoperability indicator) provided by the model owner NF.

Embodiments of the present disclosure can provide various benefits and/or advantages. For example, embodiments can enable an intermediate NF (e.g., NWDAF MTLF) to obtain an FL-trained ML model requested by an originating NF, and can prevent unauthorized intermediate NFs from doing so. In this manner, embodiments can prevent exposure of confidential and/or sensitive ML models to unauthorized parties during FL, and can prevent security risks to NFs that are capable of participating in FL. Accordingly, embodiments improve the security of and thereby facilitate deployment of FL in a multi-vendor communication network, such as 5GC.

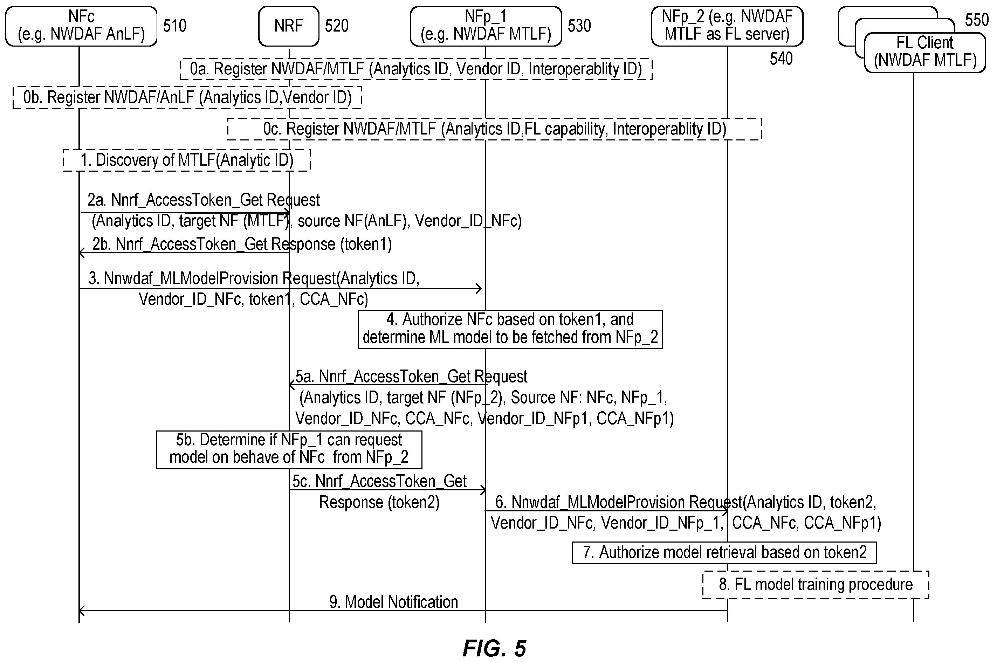

Figure 5 shows a signaling diagram of a procedure involving authorization of ML model retrieval via an intermediate NF, according to some embodiments of the present disclosure. The procedure involves an NFc (510, e.g., NWDAF AnLF), an NRF (520), a first NFp (NFp_1 530, e.g., NWDAF MTLF), a second NFp (NFp_2 540, e.g., NWDAF MTLF acting as FL server), and one or more FL clients (550, e.g., NWDAF MTLF). Although operations of the procedure are given numerical labels, this is done to facilitate explanation rather than to imply or require any particular operational ordering, unless expressly stated otherwise.

In operation 0a, NFp_1 (e.g., NWDAF MTLF) registers its NF profile in the NRF including its vendor ID, supported Analytics ID(s), and an ML Model Interoperability indicator per supported analytics ID. The ML Model Interoperability indicator is a list of NWDAF providers (vendors) that are allowed to retrieve ML models from this NWDAF MTLF. In operation 0b, the NFc (e.g., NWDAF AnLF) registers its NF profile in the NRF including its vendor ID and supported Analytics ID(s). In operation 0c, NFp_2 (e.g., NWDAF MTLF acting as FL server) registers its NF profile in the NRF with its FL related information, including supported FL capability (e.g., FL server), supported Analytics ID(s), and Interoperability Indicator per supported Analytics ID.

In operation 1, the NFc performs discovery to identify an NWDAF MTLF from which it can obtain an ML model associated with an Analytics ID. In operation 2a, the NFc requests an access token from the NRF using the Nnrf_AccessToken_Get request operation. The token request message contains NFc's Vendor ID, the analytics ID associated with the ML model, and other parameters described in 3GPP TS 33.501 (v18.1.0) clause 13.4.1.1.2.

In operation 2b, the NRF checks whether the NFc is authorized to access the requested service in NFp_1 and verifies that the NFc's Vendor ID is included in NFp_1 's interoperability indicator for the Analytics ID. If successful, NRF generates a token (token1) based on the vendor ID provided by NFc during registration in operation 0b, and sends it to the NFc.

According to 3GPP TS 33.501 (v18.1.0) clause 13.4.1.1.2, the claims in token1 shall include an NF Instance ID of NRF (token issuer), an NF Instance ID of the NFc (subject), an NF type associated with NFp_1 (audience), an expected service name of a model retrieval service offered by NFp_1, an expiration time for token1, scope of token1, and optionally "additional scope" information such as allowed resources and allowed service operations on these resources. The claims may include a list of NSSAIs or NSI IDs for NFp_1. The claims may include an NF Set ID and/or NF Service Set ID associated with NFp_1.

In operation 3, NFc sends NFp_1 a request to retrieve ML models for the Analytics ID, using Nnwdaf_MLModelProvision (Analytics ID, Vendor ID, token1) service operation. The request may also include a client credentials assertion of NFc (CCA_NFc). In operation 4, NFp_1 authenticates the NFc and verifies the received token1 as specified in 3GPP TS 33.501 (v18.1.0) clause 13.4.1.1.2, including verifying that the Analytics ID is included in the access token.

NFp_1 also determines the ML model(s) associated with the Analytics ID need to be obtained from another NFp (e.g., an NWDAF MTLF acting as FL server). For example, NFp_1 determines that FL is required for the ML model but it cannot act as an FL server. In such case, NFp_1 discovers NFp_2 (e.g., FL server NWDAF MTLF) that can provide the trained ML model.

In operation 5a, NFp_1 requests an access token from NRF using Nnrf_AccessToken_Get request. In addition to the conventional parameters described in 3GPP TS 33.501 (v18.1.0) clause 13.4.1.1.2, the token request message includes one or more of following,
- analytics ID associated with the ML model(s),
- information identifying the target NF (i.e., NFp_2), the original requesting NF (NFc), and the intermediate NF (NFp_1);
- CCA_NFc;
- vendor ID of NFc;
- a client credentials assertion by NFp_1 (CCA_NFp1); and
- vendor ID of NFp_1.

As an example, an nfInstanceId information element (IE) attribute in Nnrf_AccessToken_Get request can indicate an NF instance ID of NFp_1 as intermediate NF, while a sourceNfInstanceId IE attribute in this message can indicate the source NF instance ID of the NFc.

In operation 5b, NRF authenticates NFp_1 and NFc based on one of the SBA methods described in 3GPP TS 33.501 (v18.1.0) clause 13.3.1.2 (e.g., CCA or direct TLS connection). NRF checks whether NFc and NFp_1 are authorized to retrieve the ML model(s) associated with the analytics ID from NFp_2 and verifies that NFp_2's interoperability indicator for the Analytics ID (registered in operation 0c) matches, includes, and/or corresponds with the vendor ID(s) of NFc and NFp_1. NRF grants an access token (token2), based on the vendor IDs provided by the NFc and NFp_1 during registration in operations 0a-b. In this manner, NRF grants NFp_1 authority to obtain the ML Model corresponding to the analytics ID, specifically from NFp_2 on behalf the NFc.

In general, an NRF of Rel-16 or earlier only authenticates and authorizes an NF represented by the nflnstanceId IE attribute in the access token request, which in this case is NFp_1. After receiving the Nnrf_AccessToken_Get request, the NRF validates whether the intermediate NF (i.e., NFp_1) is authorized to receive the requested model retrieval service from the NF Service Producer (i.e., NFp_2). The NRF of Rel-16 or earlier does not validate whether the originating NFc is authorized to receive the requested service.

In operation 5c, after successful verification the NRF generates and provides token2 to the NFp_1. In addition to conventional parameters described in 3GPP TS 33.501 (v18.1.0) clause 13.4.1.1.2, this token includes the analytics ID, NF Instance ID of NFp_1 (subject), and an additional access token claim containing NF Instance ID of NFc. This additional claim facilitates authorization of both NFp_1 and NFc to retrieve the ML model(s) associated with the analytics ID from NFp_2. In some variants, token2 may also include vendor IDs of NFc and/or NFp_1.

In operation 6, the NFp_1 sends NFP_2 an Nnwdaf_MLModelProvision request to retrieve ML model(s) (e.g., FL trained) associated with the Analytics ID. The request includes one or more of following,
- token2;
- Analytics ID;
- content of CCA_NFc;
- vendor ID of NFc;
- CCA_NFp1;
- vendor ID of NFp_1; and
- subscription/notification endpoint address.

In operation 7, NFp_2 authenticates and authorizes NFc and NFp_1, including verifying that token2 includes the NF instance IDs of NFc and NFp_1 as well as the Analytics ID. In some embodiments, NFp_2 may verify the Vendor IDs of NFc and NFp_1.

In operation 8, after authentication and authorization is successful, NFp_2 (e.g., FL server NWDAF) determines the ML model(s) associated with the Analytics ID, and initiates FL training of the ML. In operation 9, after FL model training is complete, NFp_2 sends the ML model information to the notification endpoint (e.g., to NFc), using the address received in operation 6 or a locally configured address. For example, NFp2 can send NFc a Nnwdaf_MLModelProvision_ Notify message that includes the globally optimal ML model information. Alternately, if the notification endpoint address provided in operation 6 is for NFp_1, NFp_2 sends the ML model information to the NFp_1 at that address and NFp_1 then forwards this information to NFc.

According to 3GPP TS 23.288 (v18.1.0), the ML model information sent to NFc may include one of the following:
- ML model file address (e.g., URL or fully qualified domain name, FQDN); or
- identifier of an analytics data repository function (ADRF) that stores the ML model and one of the following: ML model identifier, or ML model storage transaction identifier.

Although embodiments have been described above in the specific context of an NWDAF arranged as client or server, skilled persons will understand that underlying principles of the above-described embodiments are equally applicable to other NFs, logical functions, nodes, etc. (e.g., with different names) that perform similar operations as these respective entities.

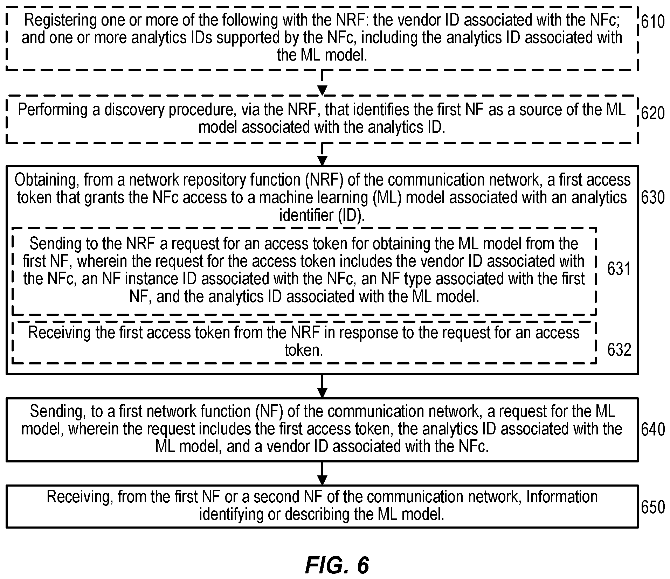

These embodiments described above can be further illustrated with reference to Figures 6-9, which depict exemplary methods (e.g., procedures) for an NFc, a first NF, a second NF, and an NRF, respectively. Put differently, various features of the operations described below correspond to various embodiments described above. The exemplary methods shown in Figures 6-9 can be used cooperatively (e.g., with each other and with other procedures described herein) to provide benefits, advantages, and/or solutions to problems described herein. Although the exemplary methods are illustrated in Figures 6-9 by specific blocks in particular orders, the operations corresponding to the blocks can be performed in different orders than shown and can be combined and/or divided into blocks and/or operations having different functionality than shown. Optional blocks and/or operations are indicated by dashed lines.

More specifically, Figure 6 illustrates an exemplary method (e.g., procedure) for a consumer NF (NFc) of a communication network (e.g., 5GC), according to various embodiments of the present disclosure. The exemplary method shown in Figure 6 can be performed by an NFc such as NWDAF (or logical function thereof, such as AnLF) or a network node hosting an NWDAF, such as described elsewhere herein.

The exemplary method includes the operations of block 630, where the NFc can obtain, from a network repository function (NRF) of the communication network, a first access token that grants the NFc access to a machine learning (ML) model associated with an analytics identifier (ID). The exemplary method also includes the operations of block 640, where the NFc can send, to a first network function (NF) of the communication network, a request for the ML model, wherein the request includes the first access token, the analytics ID associated with the ML model, and a vendor ID associated with the NFc. The exemplary method also includes the operations of block 630, where the NFc can receive, from the first NF or a second NF of the communication network, information identifying or describing the ML model.

In some embodiments, the exemplary method can also include the operations of block 610, where the NFc can register the following information with the NRF: the vendor ID associated with the NFc; and one or more analytics IDs supported by the NFc, including the analytics ID associated with the ML model. In some embodiments, the exemplary method can also include the operations of block 620, where the NFc can perform a discovery procedure, via the NRF, that identifies the first NF as a source of the ML model associated with the analytics ID.

In some of these embodiments, obtaining the first access token from the NRF in block 630 can include the following operations, labelled with corresponding sub-block numbers:
- (631) based on the discovery procedure, sending to the NRF a request for an access token for obtaining the ML model from the first NF, wherein the request for the access token includes the vendor ID associated with the NFc, an NF instance ID associated with the NFc, an NF type associated with the first NF, and the analytics ID associated with the ML model; and
- (632) receiving the first access token from the NRF in response to the request for an access token.

In some embodiments, the first access token (e.g., claims) includes one or more of the following: the analytics ID, an NF instance ID associated with the NRF, an NF instance ID associated with the NFc, an NF type associated with the first NF, and an expected name of a model retrieval service provided by the first NF.

In some embodiments, the request for the ML model also includes a client credentials assertion (CCA) associated with the NFc. In some embodiments, the ML model is owned and/or controlled by the second NF. In some embodiments, the NFc is an analytics logical function of a network data analytics function (NWDAF AnLF), the first NF is a model training logical function of a network data analytics function (NWDAF MTLF), and the second NF is an NWDAF MTLF different from the first NF.

In some embodiments, the information identifying or describing the ML model comprising an identifier of a location from which the ML model can be obtained, wherein the identifier is one of the following:
- a URL;
- a fully qualified domain name (FQDN); or
- an identifier of an analytics data repository function (ADRF) that stores the ML model and one of the following: an ML model identifier, or an ML model storage transaction identifier.

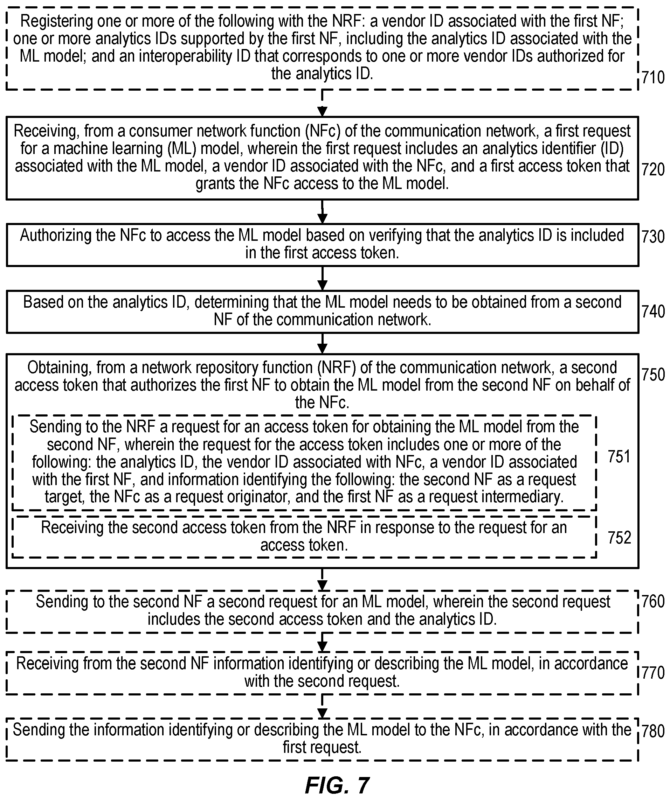

In addition, Figure 7 illustrates an exemplary method (e.g., procedure) for a first NF of a communication network (e.g., 5GC), according to various embodiments of the present disclosure. The exemplary method shown in Figure 7 can be performed by an NWDAF (or logical function thereof, such as MTLF) or a network node hosting an NWDAF, such as described elsewhere herein.

The exemplary method includes the operations of block 720, where the first NF can receive, from a consumer network function (NFc) of the communication network, a first request for an ML model. The first request includes an analytics identifier (ID) associated with the ML model, a vendor ID associated with the NFc, and a first access token that grants the NFc access to the ML model. The exemplary method also includes the operations of block 730, where the first NF can authorize the NFc to access the ML model based on verifying that the analytics ID is included in the first access token. The exemplary method also includes the operations of block 740, where based on the analytics ID, the first NF can determine that the ML model needs to be obtained from a second NF of the communication network. The exemplary method also includes the operations of block 750, where the first NF can obtain, from a network repository function (NRF) of the communication network, a second access token that authorizes the first NF to obtain the ML model from the second NF on behalf of the NFc.

In some embodiments, the exemplary method can also include the operations of block 710, where the first NF can register the following information with the NRF: a vendor ID associated with the first NF; one or more analytics IDs supported by the first NF, including the analytics ID associated with the ML model; and an interoperability ID that corresponds to one or more vendor IDs authorized for the analytics ID.

In some embodiments, the second access token (e.g., claims) includes the following: the analytics ID, an NF Instance ID associated with the first NF, and an NF Instance ID associated with the NFc. In some of these embodiments, the second access token also includes one or more of the following: an NF instance ID associated with the NRF, an NF type associated with the second NF, and an expected name of a model retrieval service provided by the second NF. In some embodiments, the first request for the ML model also includes a client credentials assertion (CCA) associated with the NFc.

In some embodiments, obtaining the second access token from the NRF in block 750 includes the following operations, labelled with corresponding sub-block numbers:
- (751) sending, to the NRF, a request for an access token for obtaining the ML model from the second NF, wherein the request for the access token includes one or more of the following: the analytics ID, the vendor ID associated with NFc, a vendor ID associated with the first NF, and information identifying the following: the second NF as a request target, the NFc as a request originator, and the first NF as a request intermediary; and
- (752) receiving the second access token from the NRF in response to the request for an access token.

In some of these embodiments, the request for the access token also includes one or more of the following: a client credentials assertion (CCA) associated with the NFc, and a CCA associated with the first NF.

In some embodiments, the exemplary method can also include the operations of block 760, where the first NF can send to the second NF a second request for an ML model, wherein the second request includes the second access token and the analytics ID.

In some of these embodiments, the second request also includes one or more of the following: the vendor ID associated with NFc, and a vendor ID associated with the first NF.

In some of these embodiments, the second request for an ML model also includes one or more of the following: a client credentials assertion (CCA) associated with the NFc, a CCA associated with the first NF, and a notification endpoint address.

In some of these embodiments, the exemplary method can also include the operations of blocks 770-780, where the first NF can receive from the second NF information identifying or describing the ML model, in accordance with the second request, and send the information identifying or describing the ML model to the NFc, in accordance with the first request.

In some embodiments, the information identifying or describing the ML model comprises an identifier of a location from which the ML model can be obtained, wherein the identifier is one of the following:
- a URL;
- a fully qualified domain name (FQDN); or
- an identifier of an analytics data repository function (ADRF) that stores the ML model and one of the following: an ML model identifier, or an ML model storage transaction identifier.

In some embodiments, the ML model is owned and/or controlled by the second NF. In some embodiments, the NFc is an analytics logical function of a network data analytics function (NWDAF AnLF), the first NF is a model training logical function of a network data analytics function (NWDAF MTLF), and the second NF is an NWDAF MTLF different from the first NF.

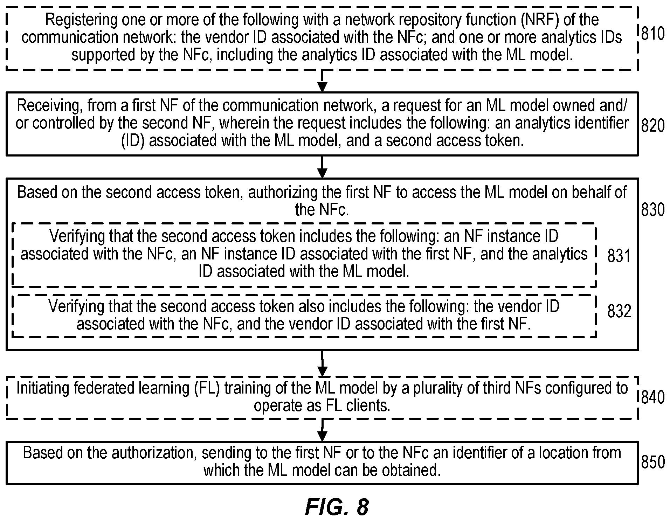

In addition, Figure 8 illustrates an exemplary method (e.g., procedure) for a second NF of a communication network (e.g., 5GC), according to various embodiments of the present disclosure. The exemplary method shown in Figure 8 can be performed by an NWDAF (or logical function thereof, such as MTLF) or a network node hosting an NWDAF, such as described elsewhere herein.

The exemplary method includes the operations of block 820, where the second NF can receive, from a first NF of the communication network, a request for a machine learning (ML) model owned and/or controlled by the second NF. The request includes a second access token and an analytics identifier (ID) associated with the ML model. The exemplary method also includes the operations of block 820, where based on the second access token, the second NF can authorize the first NF to access the ML model on behalf of the NFc. The exemplary method also includes the operations of block 820, where based on the authorization, the second NF can send to the first NF or to the NFc information identifying or describing the ML model.

In some embodiments, the request also includes one or more of the following: a vendor ID associated with a consumer NF (NFc) of the communication network, and a vendor ID associated with the first NF.

In some embodiments, the exemplary method can also include the operations of block 810, where the second NF can register one or more of the following with a network repository function (NRF) of the communication network:
- a vendor ID associated with the second NF;
- one or more analytics IDs supported by the second NF, including the analytics ID associated with the ML model;
- an interoperability ID that corresponds to one or more vendor IDs authorized for the analytics ID; and
- federated learning (FL) capabilities supported by the second NF.

In some embodiments, the second NF is configured to operate as a federated learning (FL) server and the exemplary method can also include the operations of block 840, where the second NF can initiate FL training of the ML model by a plurality of third NFs configured to operate as FL clients. In such case, the information identifying or describing the ML model is sent in block 850 after FL training of the ML model is completed.

In some embodiments, the second request for an ML model also includes one or more of the following: a client credentials assertion (CCA) associated with the NFc, a CCA associated with the first NF, and a notification endpoint address.

In some embodiments, authorizing the first NF based on the second access token in block 830 includes the operations of sub-block 831, where the second NF can verify that the second access token include the following: an NF instance ID associated with the NFc, an NF instance ID associated with the first NF, and the analytics ID associated with the ML model. In some of these embodiments, authorizing the first NF based on the second access token in block 830 also includes the operations of sub-block 832, where the second NF can verify that the second access token also include the following: the vendor ID associated with the NFc, and the vendor ID associated with the first NF.

In some embodiments, the NFc is an analytics logical function of a network data analytics function (NWDAF AnLF), the first NF is a model training logical function of a network data analytics function (NWDAF MTLF), and the second NF is an NWDAF MTLF different from the first NF. In some embodiments, the information identifying or describing the ML model comprises an identifier of a location from which the ML model can be obtained, wherein the identifier is one of the following:
- a URL;
- a fully qualified domain name (FQDN); or
- an identifier of an analytics data repository function (ADRF) that stores the ML model and one of the following: an ML model identifier, or an ML model storage transaction identifier.

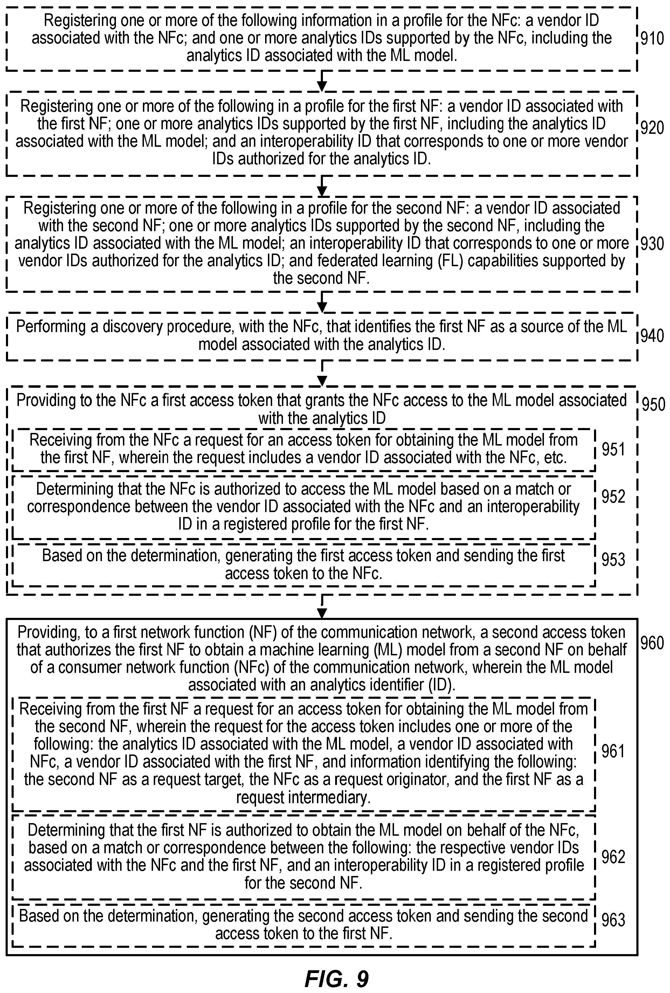

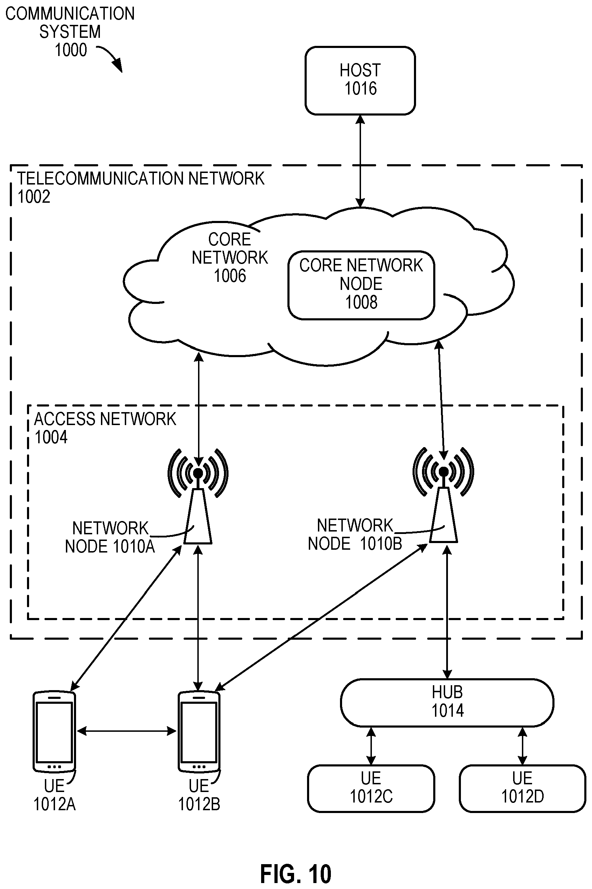

In addition, Figure 9 illustrates an exemplary method (e.g., procedure) for an NRF of a communication network (e.g., 5GC), according to various embodiments of the present disclosure. The exemplary method shown in Figure 10 can be performed by an NRF or a network node hosting an NRF, such as described elsewhere herein.

The exemplary method includes the operations of block 960, where the NRF can provide, to a first network function (NF) of the communication network, a second access token that authorizes the first NF to obtain a machine learning (ML) model from a second NF on behalf of a consumer network function (NFc) of the communication network, wherein the ML model associated with an analytics identifier (ID).

In some embodiments, the exemplary method can also include the operations of block 910, where the NRF can register one or more of the following information in a profile for the NFc: a vendor ID associated with the NFc; and one or more analytics IDs supported by the NFc, including the analytics ID associated with the ML model. In some embodiments, the exemplary method can also include the operations of block 920, where the NRF can register one or more of the following in a profile for the first NF: a vendor ID associated with the first NF; one or more analytics IDs supported by the first NF, including the analytics ID associated with the ML model; and an interoperability ID that corresponds to one or more vendor IDs authorized for the analytics ID.

In some embodiments, the exemplary method can also include the operations of block 930, where the NRF can register one or more of the following in a profile for the second NF:
- a vendor ID associated with the second NF;
- one or more analytics IDs supported by the second NF, including the analytics ID associated with the ML model;
- an interoperability ID that corresponds to one or more vendor IDs authorized for the analytics ID; and
- federated learning (FL) capabilities supported by the second NF.

In some embodiments, the exemplary method can also include the operations of block 940, where the NRF can perform a discovery procedure, with the NFc, that identifies the first NF as a source of the ML model associated with the analytics ID.

In some embodiments, providing the second access token to the first NF in block 960 includes the following operations, labelled with corresponding sub-block numbers:
- (961) receiving from the first NF a request for an access token for obtaining the ML model from the second NF, wherein the request for the access token includes one or more of the following: the analytics ID associated with the ML model, a vendor ID associated with NFc, a vendor ID associated with the first NF, and information identifying the following: the second NF as a request target, the NFc as a request originator, and the first NF as a request intermediary;
- (962) determining that the first NF is authorized to obtain the ML model on behalf of the NFc, based on a match or correspondence between the following: the respective vendor IDs associated with the NFc and the first NF, and an interoperability ID in a registered profile for the second NF; and
- (963) based on the determination, generating the second access token and sending the second access token to the first NF.

In some of these embodiments, the request for the access token also includes one or more of the following: a client credentials assertion (CCA) associated with the NFc, and a CCA associated with the first NF. In some of these embodiments, the second access token (e.g., claims) includes the following: the analytics ID, an NF instance ID associated with the first NF, and an NF Instance ID associated with the NFc. In some variants of these embodiments, the second access token (e.g., claims) also includes one or more of the following: an NF instance ID associated with the NRF, an NF type associated with the second NF, and an expected name of a model retrieval service provided by the second NF.

In some embodiments, the exemplary method can also include the operations of block 950, where before providing the second access token, the NRF can provide to the NFc a first access token that grants the NFc access to the ML model associated with the analytics ID. In some of these embodiments, providing the first access token to the NFc includes the following operations, labelled with corresponding sub-block numbers:
- (951) receiving from the NFc a request for an access token for obtaining the ML model from the first NF, wherein the request for the access token includes a vendor ID associated with the NFc, an NF instance ID associated with the NFc, an NF type associated with the first NF, and the analytics ID associated with the ML model;
- (952) determining that the NFc is authorized to access the ML model based on a match or correspondence between the vendor ID associated with the NFc and an interoperability ID in a registered profile for the first NF; and
- (953) based on the determination, generating the first access token and sending the first access token to the NFc.

In some of these embodiments, the first access token (e.g., claims) includes one or more of the following: the analytics ID, an NF instance ID associated with the NRF, an NF instance ID associated with the NFc, an NF type associated with the first NF, and an expected name of a model retrieval service provided by the first NF.

In some embodiments, the ML model is owned and/or controlled by the second NF. In some embodiments, the NFc is an analytics logical function of a network data analytics function (NWDAF AnLF), the first NF is a model training logical function of a network data analytics function (NWDAF MTLF), and the second NF is an NWDAF MTLF different from the first NF.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

Figure 10 shows an example of a communication system 1000 in accordance with some embodiments. In this example, communication system 1000 includes a telecommunication network 1002 that includes an access network 1004 (e.g., RAN) and a core network 1006, which includes one or more core network nodes 1008. Access network 1004 includes one or more access network nodes, such as network nodes 1010a-b (one or more of which may be generally referred to as network nodes 1010), or any other similar 3GPP access nodes or non-3GPP access points. Moreover, as will be appreciated by those of skill in the art, a network node is not necessarily limited to an implementation in which a radio portion and a baseband portion are supplied and integrated by a single vendor. Thus, it will be understood that network nodes include disaggregated implementations or portions thereof. For example, in some embodiments, telecommunication network 1002 includes one or more Open-RAN (ORAN) network nodes. An ORAN network node is a node in telecommunication network 1002 that supports an ORAN specification (e.g., a specification published by the O-RAN Alliance, or any similar organization) and may operate alone or together with other nodes to implement one or more functionalities of any node in telecommunication network 1002, including one or more network nodes 1010 and/or core network nodes 1008.

Examples of an ORAN network node include an open radio unit (O-RU), an open distributed unit (O-DU), an open central unit (O-CU), including an O-CU control plane (O-CU-CP) or an O-CU user plane (O-CU-UP), a RAN intelligent controller (near-real time or non-real time) hosting software or software plug-ins, such as a near-real time control application (e.g., xApp) or a non-real time control application (e.g., rApp), or any combination thereof (the adjective "open" designating support of an ORAN specification). The network node may support a specification by, for example, supporting an interface defined by the ORAN specification, such as an A1, F1, W1, E1, E2, X2, Xn interface, an open fronthaul user plane interface, or an open fronthaul management plane interface. Moreover, an ORAN access node may be a logical node in a physical node. Furthermore, an ORAN network node may be implemented in a virtualization environment (described further below) in which one or more network functions are virtualized. For example, the virtualization environment may include an O-Cloud computing platform orchestrated by a Service Management and Orchestration Framework via an O-2 interface defined by the O-RAN Alliance or comparable technologies. network nodes 1010 facilitate direct or indirect connection of UEs, such as by connecting UEs 1012a-d (one or more of which may be generally referred to as UEs 1012) to core network 1006 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, communication system 1000 may include any number of wired or wireless networks, network nodes, UEs, and/or any other components or systems that may facilitate or participate in the communication of data and/or signals whether via wired or wireless connections. Communication system 1000 may include and/or interface with any type of communication, telecommunication, data, cellular, radio network, and/or other similar type of system.

UEs 1012 may be any of a wide variety of communication devices, including wireless devices arranged, configured, and/or operable to communicate wirelessly with network nodes 1010 and other communication devices. Similarly, network nodes 1010 are arranged, capable, configured, and/or operable to communicate directly or indirectly with UEs 1012 and/or with other network nodes or equipment in telecommunication network 1002 to enable and/or provide network access, such as wireless network access, and/or to perform other functions, such as administration in telecommunication network 1002.

In the depicted example, core network 1006 connects network nodes 1010 to one or more hosts, such as host 1016. These connections may be direct or indirect via one or more intermediary networks or devices. In other examples, network nodes may be directly coupled to hosts. Core network 1006 includes one or more core network nodes (e.g., 1008) that are structured with hardware and software components. Features of these components may be substantially similar to those described with respect to the UEs, network nodes, and/or hosts, such that the descriptions thereof are generally applicable to the corresponding components of core network node 1008. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

Host 1016 may be under the ownership or control of a service provider other than an operator or provider of access network 1004 and/or telecommunication network 1002, and may be operated by the service provider or on behalf of the service provider. Host 1016 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, communication system 1000 of Figure 10 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, telecommunication network 1002 is a cellular network that implements 3GPP standardized features. Accordingly, telecommunication network 1002 may support network slicing to provide different logical networks to different devices that are connected to telecommunication network 1002. For example, telecommunication network 1002 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, UEs 1012 are configured to transmit and/or receive information without direct human interaction. For instance, a UE may be designed to transmit information to access network 1004 on a predetermined schedule, when triggered by an internal or external event, or in response to requests from access network 1004. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, hub 1014 communicates with access network 1004 to facilitate indirect communication between one or more UEs (e.g., UE 1012c and/or 1012d) and network nodes (e.g., network node 1010b). In some examples, hub 1014 may be a controller, router, content source and analytics, or any of the other communication devices described herein regarding UEs. For example, hub 1014 may be a broadband router enabling access to core network 1006 for the UEs. As another example, hub 1014 may be a controller that sends commands or instructions to one or more actuators in the UEs. Commands or instructions may be received from the UEs, network nodes 1010, or by executable code, script, process, or other instructions in hub 1014. As another example, hub 1014 may be a data collector that acts as temporary storage for UE data and, in some embodiments, may perform analysis or other processing of the data. As another example, hub 1014 may be a content source. For example, for a UE that is a VR headset, display, loudspeaker or other media delivery device, hub 1014 may retrieve VR assets, video, audio, or other media or data related to sensory information via a network node, which hub 1014 then provides to the UE either directly, after performing local processing, and/or after adding additional local content. In still another example, hub 1014 acts as a proxy server or orchestrator for the UEs, in particular if one or more of the UEs are low energy IoT devices.

Hub 1014 may have a constant/persistent or intermittent connection to network node 1010b. Hub 1014 may also allow for a different communication scheme and/or schedule between hub 1014 and UEs (e.g., UE 1012c and/or 1012d), and between hub 1014 and core network 1006. In other examples, hub 1014 is connected to core network 1006 and/or one or more UEs via a wired connection. Moreover, hub 1014 may be configured to connect to an M2M service provider over access network 1004 and/or to another UE over a direct connection. In some scenarios, UEs may establish a wireless connection with network nodes 1010 while still connected via hub 1014 via a wired or wireless connection. In some embodiments, hub 1014 may be a dedicated hub - that is, a hub whose primary function is to route communications to/from the UEs from/to network node 1010b. In other embodiments, hub 1014 may be a non-dedicated hub - that is, a device which is capable of operating to route communications between the UEs and network node 1010b, but which is additionally capable of operating as a communication start and/or end point for certain data channels.

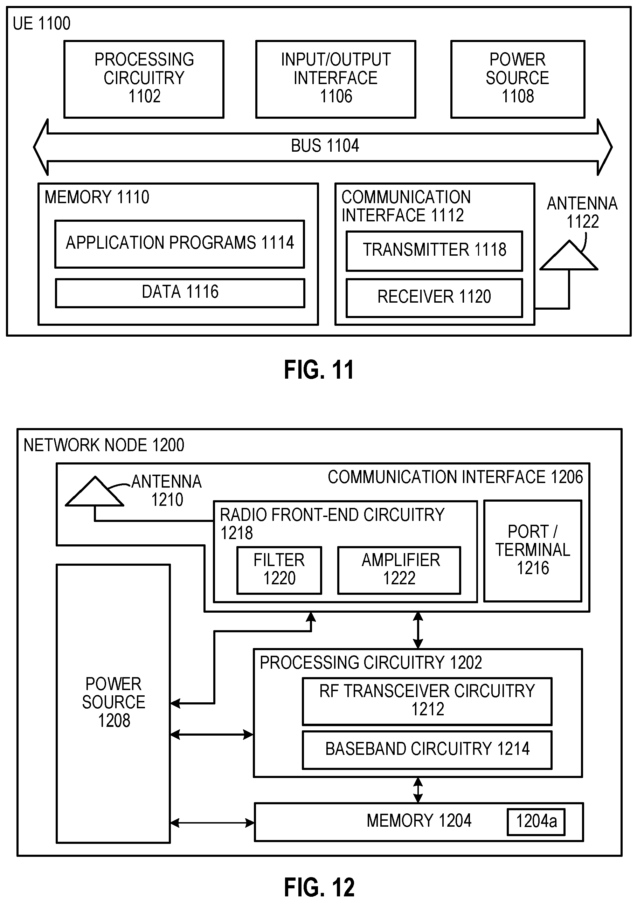

Figure 11 shows a UE 1100 in accordance with some embodiments. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle, vehicle-mounted or vehicle embedded/integrated wireless device, etc. Other examples include any UE identified by 3GPP, including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

UE 1100 includes processing circuitry 1102 that is operatively coupled via a bus 1104 to an input/output interface 1106, a power source 1108, a memory 1110, a communication interface 1112, and/or any other component, or any combination thereof. Certain UEs may utilize all or a subset of the components shown in Figure 11. The level of integration between the components may vary from one UE to another UE. Further, certain UEs may contain multiple instances of a component, such as multiple processors, memories, transceivers, transmitters, receivers, etc.

Processing circuitry 1102 is configured to process instructions and data and may be configured to implement any sequential state machine operative to execute instructions stored as machine-readable computer programs in memory 1110. Processing circuitry 1102 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, processing circuitry 1102 may include multiple central processing units (CPUs).

In the example, input/output interface 1106 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into UE 1100. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, power source 1108 is structured as a battery or battery pack. Other types of power sources, such as an external power source (e.g., an electricity outlet), photovoltaic device, or power cell, may be used. Power source 1108 may further include power circuitry for delivering power from power source 1108 itself, and/or an external power source, to the various parts of UE 1100 via input circuitry or an interface such as an electrical power cable. Delivering power may be, for example, for charging power source 1108. Power circuitry may perform any formatting, converting, or other modification to the power from power source 1108 to make the power suitable for the respective components of UE 1100 to which power is supplied.

Memory 1110 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, memory 1110 includes one or more application programs 1114, such as an operating system, web browser application, a widget, gadget engine, or other application, and corresponding data 1116. Memory 1110 may store, for use by UE 1100, any of a variety of various operating systems or combinations of operating systems.

Memory 1110 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card." Memory 1110 may allow UE 1100 to access instructions, application programs and the like, stored on transitory or non-transitory memory media, to off-load data, or to upload data. An article of manufacture, such as one utilizing a communication system may be tangibly embodied as or in memory 1110, which may be or comprise a device-readable storage medium.

Processing circuitry 1102 may be configured to communicate with an access network or other network using communication interface 1112. Communication interface 1112 may comprise one or more communication subsystems and may include or be communicatively coupled to an antenna 1122. Communication interface 1112 may include one or more transceivers used to communicate, such as by communicating with one or more remote transceivers of another device capable of wireless communication (e.g., another UE or a network node in an access network). Each transceiver may include a transmitter 1118 and/or a receiver 1120 appropriate to provide network communications (e.g., optical, electrical, frequency allocations, and so forth). Moreover, transmitter 1118 and receiver 1120 may be coupled to one or more antennas (e.g., antenna 1122) and may share circuit components, software or firmware, or alternatively be implemented separately.

In the illustrated embodiment, communication functions of communication interface 1112 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1112, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to UE 1100 shown in Figure 11.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 12 shows a network node 1200 in accordance with some embodiments. Examples of network nodes include, but are not limited to, access points (APs) (e.g., radio access points), base stations (e.g., radio base stations, Node Bs, eNBs, gNBs), and O-RAN nodes or components of an O-RAN node (e.g., O-RU, O-DU, O-CU).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units, distributed units (e.g., in an O-RAN access node) and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

Network node 1200 includes a processing circuitry 1202, a memory 1204, a communication interface 1206, and a power source 1208. Network node 1200 may be composed of multiple physically separate components (e.g., a NodeB component and a RNC component, or a BTS component and a BSC component, etc.), which may each have their own respective components. In certain scenarios in which network node 1200 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 1200 may be configured to support multiple radio access technologies (RATs). In such embodiments, some components may be duplicated (e.g., separate memory 1204 for different RATs) and some components may be reused (e.g., a same antenna 1210 may be shared by different RATs). Network node 1200 may also include multiple sets of the various illustrated components for different wireless technologies integrated into network node 1200, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1200.

The processing circuitry 1202 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1200 components, such as memory 1204, to provide network node 1200 functionality.

In some embodiments, the processing circuitry 1202 includes a system on a chip (SOC). In some embodiments, the processing circuitry 1202 includes radio frequency (RF) transceiver circuitry 1212 and/or baseband processing circuitry 1214. In some embodiments, RF transceiver circuitry 1212 and baseband processing circuitry 1214 may be on separate chips (or sets of chips), boards, or units, such as radio units and digital units. In alternative embodiments, part or all of RF transceiver circuitry 1212 and baseband processing circuitry 1214 may be on the same chip or set of chips, boards, or units.

Memory 1204 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1202. Memory 1204 may store any suitable instructions, data, or information, including a computer program, software, an application including one or more of logic, rules, code, tables, and/or other instructions (collected denoted computer program 1204a, which may be in the form of a computer program product) capable of being executed by the processing circuitry 1202 and utilized by network node 1200. Memory 1204 may be used to store any calculations made by the processing circuitry 1202 and/or any data received via communication interface 1206. In some embodiments, the processing circuitry 1202 and memory 1204 is integrated.

Communication interface 1206 is used in wired or wireless communication of signaling and/or data between a network node, access network, and/or UE. As illustrated, communication interface 1206 comprises port(s)/terminal(s) 1216 to send and receive data, for example to and from a network over a wired connection. Communication interface 1206 also includes radio front-end circuitry 1218 that may be coupled to, or in certain embodiments a part of, antenna 1210. Radio front-end circuitry 1218 comprises filters 1220 and amplifiers 1222. Radio front-end circuitry 1218 may be connected to an antenna 1210 and processing circuitry 1202. The radio front-end circuitry may be configured to condition signals communicated between antenna 1210 and processing circuitry 1202. Radio front-end circuitry 1218 may receive digital data that is to be sent out to other network nodes or UEs via a wireless connection. Radio front-end circuitry 1218 may convert the digital data into a radio signal having the appropriate channel and bandwidth parameters using a combination of filters 1220 and/or amplifiers 1222. The radio signal may then be transmitted via antenna 1210. Similarly, when receiving data, antenna 1210 may collect radio signals which are then converted into digital data by radio front-end circuitry 1218. The digital data may be passed to the processing circuitry 1202. In other embodiments, the communication interface may comprise different components and/or different combinations of components.

In certain alternative embodiments, network node 1200 does not include separate radio front-end circuitry 1218, instead, the processing circuitry 1202 includes radio front-end circuitry and is connected to antenna 1210. Similarly, in some embodiments, all or some of RF transceiver circuitry 1212 is part of communication interface 1206. In still other embodiments, communication interface 1206 includes one or more ports or terminals 1216, radio front-end circuitry 1218, and RF transceiver circuitry 1212, as part of a radio unit (not shown), and communication interface 1206 communicates with baseband processing circuitry 1214, which is part of a digital unit (not shown).

Antenna 1210 may include one or more antennas, or antenna arrays, configured to send and/or receive wireless signals. Antenna 1210 may be coupled to radio front-end circuitry 1218 and may be any type of antenna capable of transmitting and receiving data and/or signals wirelessly. In certain embodiments, antenna 1210 is separate from network node 1200 and connectable to network node 1200 through an interface or port.

Antenna 1210, communication interface 1206, and/or the processing circuitry 1202 may be configured to perform any receiving operations and/or certain obtaining operations described herein as being performed by the network node. Any information, data and/or signals may be received from a UE, another network node and/or any other network equipment. Similarly, antenna 1210, communication interface 1206, and/or the processing circuitry 1202 may be configured to perform any transmitting operations described herein as being performed by the network node. Any information, data and/or signals may be transmitted to a UE, another network node and/or any other network equipment.

Power source 1208 provides power to the various components of network node 1200 in a form suitable for the respective components (e.g., at a voltage and current level needed for each respective component). Power source 1208 may further comprise, or be coupled to, power management circuitry to supply the components of network node 1200 with power for performing the functionality described herein. For example, network node 1200 may be connectable to an external power source (e.g., the power grid, an electricity outlet) via an input circuitry or interface such as an electrical cable, whereby the external power source supplies power to power circuitry of power source 1208. As a further example, power source 1208 may comprise a source of power in the form of a battery or battery pack which is connected to, or integrated in, power circuitry. The battery may provide backup power should the external power source fail.

Embodiments of network node 1200 may include additional components beyond those shown in Figure 12 for providing certain aspects of the network node's functionality, including any of the functionality described herein and/or any functionality necessary to support the subject matter described herein. For example, network node 1200 may include user interface equipment to allow input of information into network node 1200 and to allow output of information from network node 1200. This may allow a user to perform diagnostic, maintenance, repair, and other administrative functions for network node 1200.

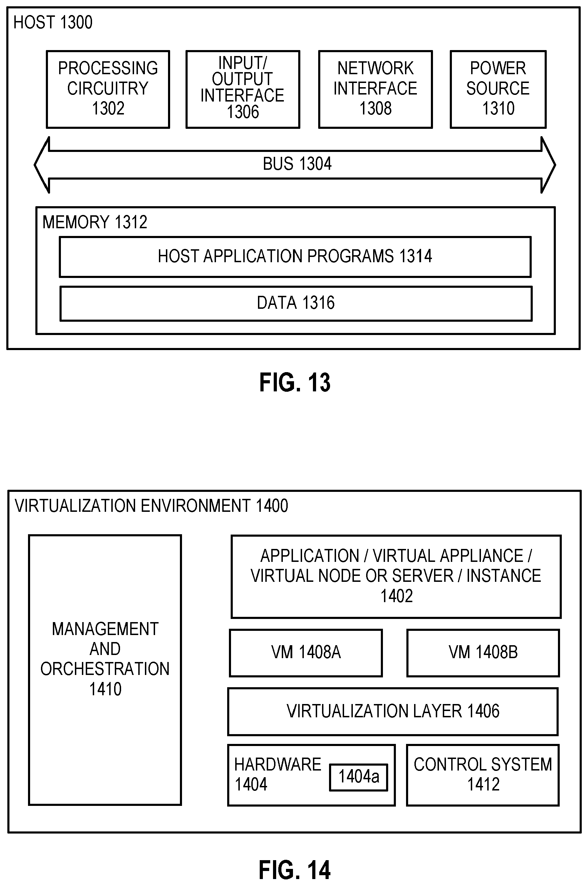

Figure 13 is a block diagram of a host 1300, which may be an embodiment of host 1016 of Figure 10, in accordance with various aspects described herein. Host 1300 may be or comprise various combinations hardware and/or software, including a standalone server, a blade server, a cloud-implemented server, a distributed server, a virtual machine, container, or processing resources in a server farm. Host 1300 may provide one or more services to one or more UEs.

Host 1300 includes processing circuitry 1302 that is operatively coupled via a bus 1304 to an input/output interface 1306, a network interface 1308, a power source 1310, and a memory 1312. Other components may be included in other embodiments. Features of these components may be substantially similar to those described with respect to the devices of previous figures, such as Figures 11 and 12, such that the descriptions thereof are generally applicable to the corresponding components of host 1300.

Memory 1312 may include one or more computer programs including one or more host application programs 1314 and data 1316, which may include user data, e.g., data generated by a UE for host 1300 or data generated by host 1300 for a UE. Embodiments of host 1300 may utilize only a subset or all of the components shown. Host application programs 1314 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). Host application programs 1314 may also provide for user authentication and licensing checks and may periodically report health, routes, and content availability to a central node, such as a device in or on the edge of a core network. Accordingly, host 1300 may select and/or indicate a different host for over-the-top services for a UE. Host application programs 1314 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 14 is a block diagram illustrating a virtualization environment 1400 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1400 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized. In some embodiments, the virtualization environment 1400 includes components defined by the O-RAN Alliance, such as an O-Cloud environment orchestrated by a Service Management and Orchestration Framework via an O-2 interface.

Applications 1402 (which may alternatively be called software instances, virtual appliances, network functions, virtual nodes, virtual network functions, etc.) are run in the virtualization environment 1400 to implement some of the features, functions, and/or benefits of some of the embodiments disclosed herein.

Hardware 1404 includes processing circuitry, memory that stores software and/or instructions (collected denoted computer program 1404a, which may be in the form of a computer program product) executable by hardware processing circuitry, and/or other hardware devices as described herein, such as a network interface, input/output interface, and so forth. Software may be executed by the processing circuitry to instantiate one or more virtualization layers 1406 (also referred to as hypervisors or virtual machine monitors (VMMs)), provide VMs 1408a and 1408b (one or more of which may be generally referred to as VMs 1408), and/or perform any of the functions, features and/or benefits described in relation with some embodiments described herein. Virtualization layer 1406 may present a virtual operating platform that appears like networking hardware to the VMs 1408.

VMs 1408 comprise virtual processing, virtual memory, virtual networking or interface and virtual storage, and may be run by a corresponding virtualization layer 1406. Different embodiments of the instance of a virtual appliance 1402 may be implemented on one or more of VMs 1408, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, each VM 1408 may be a software implementation of a physical machine that runs programs as if they were executing on a physical, non-virtualized machine. Each VM 1408, and that part of hardware 1404 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1408 on top of the hardware 1404 and corresponds to the application 1402.

Hardware 1404 may be implemented in a standalone network node with generic or specific components. Hardware 1404 may implement some functions via virtualization. Alternatively, hardware 1404 may be part of a larger cluster of hardware (e.g. such as in a data center or CPE) where many hardware nodes work together and are managed via management and orchestration function 1410, which, among others, oversees lifecycle management of applications 1402. In some embodiments, hardware 1404 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1412 which may alternatively be used for communication between hardware nodes and radio units.

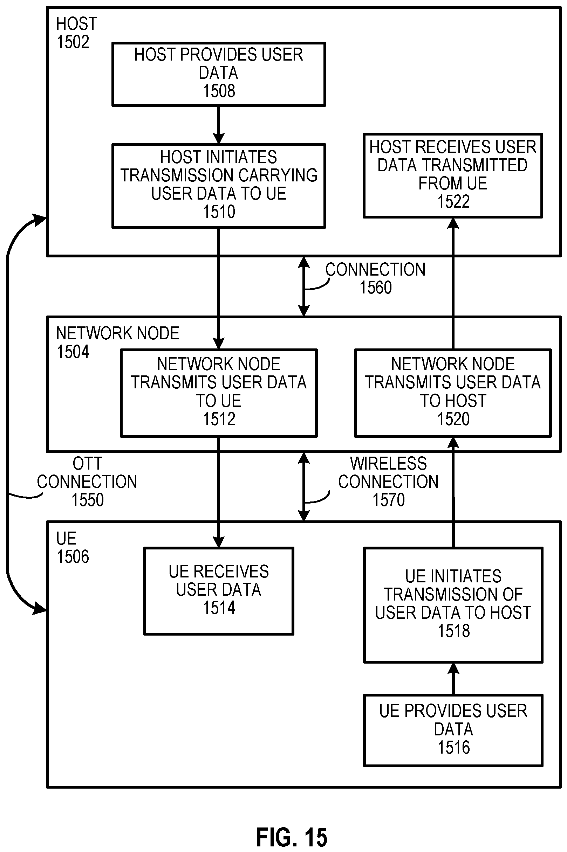

Figure 15 shows a communication diagram of a host 1502 communicating via a network node 1504 with a UE 1506 over a partially wireless connection in accordance with some embodiments. Example implementations, in accordance with various embodiments, of the UE (such as a UE 1012a of Figure 10 and/or UE 1100 of Figure 11), network node (such as network node 1010a of Figure 10 and/or network node 1200 of Figure 12), and host (such as host 1016 of Figure 10 and/or host 1300 of Figure 13) discussed in the preceding paragraphs will now be described with reference to Figure 15.

Like host 1300, embodiments of host 1502 include hardware, such as a communication interface, processing circuitry, and memory. Host 1502 also includes software, which is stored in or accessible by host 1502 and executable by the processing circuitry. The software includes a host application that may be operable to provide a service to a remote user, such as UE 1506 connecting via an over-the-top (OTT) connection 1550 extending between UE 1506 and host 1502. In providing the service to the remote user, a host application may provide user data which is transmitted using OTT connection 1550.

Network node 1504 includes hardware enabling it to communicate with host 1502 and UE 1506. Connection 1560 may be direct or pass through a core network (like core network 1006 of Figure 10) and/or one or more other intermediate networks, such as one or more public, private, or hosted networks. For example, an intermediate network may be a backbone network or the Internet.

UE 1506 includes hardware and software, which is stored in or accessible by UE 1506 and executable by the UE's processing circuitry. The software includes a client application, such as a web browser or operator-specific "app" that may be operable to provide a service to a human or non-human user via UE 1506 with the support of host 1502. In host 1502, an executing host application may communicate with the executing client application via OTT connection 1550 terminating at UE 1506 and host 1502. In providing the service to the user, the UE's client application may receive request data from the host's host application and provide user data in response to the request data. OTT connection 1550 may transfer both the request data and the user data. The UE's client application may interact with the user to generate the user data that it provides to the host application through OTT connection 1550.

OTT connection 1550 may extend via a connection 1560 between host 1502 and network node 1504 and via a wireless connection 1570 between network node 1504 and UE 1506 to provide the connection between host 1502 and UE 1506. Connection 1560 and wireless connection 1570, over which OTT connection 1550 may be provided, have been drawn abstractly to illustrate the communication between host 1502 and UE 1506 via network node 1504, without explicit reference to any intermediary devices and the precise routing of messages via these devices.

As an example of transmitting data via OTT connection 1550, in step 1508, host 1502 provides user data, which may be performed by executing a host application. In some embodiments, the user data is associated with a particular human user interacting with UE 1506. In other embodiments, the user data is associated with a UE 1506 that shares data with host 1502 without explicit human interaction. In step 1510, host 1502 initiates a transmission carrying the user data towards UE 1506. Host 1502 may initiate the transmission responsive to a request transmitted by UE 1506. The request may be caused by human interaction with UE 1506 or by operation of the client application executing on UE 1506. The transmission may pass via network node 1504, in accordance with the teachings of the embodiments described throughout this disclosure. Accordingly, in step 1512, network node 1504 transmits to UE 1506 the user data that was carried in the transmission that host 1502 initiated, in accordance with the teachings of the embodiments described throughout this disclosure. In step 1514, UE 1506 receives the user data carried in the transmission, which may be performed by a client application executed on UE 1506 associated with the host application executed by host 1502.

In some examples, UE 1506 executes a client application which provides user data to host 1502. The user data may be provided in reaction or response to the data received from host 1502. Accordingly, in step 1516, UE 1506 may provide user data, which may be performed by executing the client application. In providing the user data, the client application may further consider user input received from the user via an input/output interface of UE 1506. Regardless of the specific manner in which the user data was provided, UE 1506 initiates, in step 1518, transmission of the user data towards host 1502 via network node 1504. In step 1520, in accordance with the teachings of the embodiments described throughout this disclosure, network node 1504 receives user data from UE 1506 and initiates transmission of the received user data towards host 1502. In step 1522, host 1502 receives the user data carried in the transmission initiated by UE 1506.

One or more of the various embodiments improve the performance of OTT services provided to the UE 1506 using the OTT connection 1550, in which the wireless connection 1570 forms the last segment. More precisely, embodiments can enable an intermediate NF (e.g., NWDAF MTLF) to obtain an FL-trained ML model requested by an originating NF, and can prevent unauthorized intermediate NFs from doing so. In this manner, embodiments can prevent exposure of confidential and/or sensitive ML models to unauthorized parties during FL, and can mitigate security risks to NFs participating in FL. By improving security, embodiments facilitate deployment of FL in a multi-vendor communication network (e.g., 5GC), which can improve ML models used for network performance analytics in such networks. This can result in improved network performance, which increases the value of OTT services delivered over such improved networks to both end users and service providers.

In an example scenario, factory status information may be collected and analyzed by host 1502. As another example, host 1502 may process audio and video data which may have been retrieved from a UE for use in creating maps. As another example, host 1502 may collect and analyze real-time data to assist in controlling vehicle congestion (e.g., controlling traffic lights). As another example, host 1502 may store surveillance video uploaded by a UE. As another example, host 1502 may store or control access to media content such as video, audio, VR or AR which it can broadcast, multicast or unicast to UEs. As other examples, host 1502 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring OTT connection 1550 between host 1502 and UE 1506, in response to variations in the measurement results. The measurement procedure and/or the network functionality for reconfiguring the OTT connection may be implemented in software and hardware of host 1502 and/or UE 1506. In some embodiments, sensors (not shown) may be deployed in or in association with other devices through which OTT connection 1550 passes; the sensors may participate in the measurement procedure by supplying values of the monitored quantities exemplified above, or supplying values of other physical quantities from which software may compute or estimate the monitored quantities. The reconfiguring of OTT connection 1550 may include message format, retransmission settings, preferred routing etc.; the reconfiguring need not directly alter the operation of network node 1504. Such procedures and functionalities may be known and practiced in the art. In certain embodiments, measurements may involve proprietary UE signaling that facilitates measurements of throughput, propagation times, latency and the like, by host 1502. The measurements may be implemented in that software causes messages to be transmitted, in particular empty or 'dummy' messages, using OTT connection 1550 while monitoring propagation times, errors, etc.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (*e.g.,* "data" and "information"). It should be understood, that although these terms (and/or other terms that can be synonymous to one another) can be used synonymously herein, there can be instances when such words can be intended to not be used synonymously.

Example embodiments of the techniques and apparatus described herein include, but are not limited to, the following claims.

## Claims

1. A method for a consumer network function, NFc, (510) of a communication network, the method comprising:
obtaining (630), from a network repository function, NRF, (520) of the communication network, a first access token that grants the NFc access to a machine learning, ML, model associated with an analytics identifier, ID;
sending (640), to a first network function, NF, (530) of the communication network, a request for the ML model, wherein the request includes the first access token, the analytics ID associated with the ML model, and a vendor ID associated with the NFc; and
receiving (650), from a second NF (540) of the communication network, information identifying or describing the ML model, wherein the second NF (540) has received a second request, from the first NF (530), for the ML model, wherein the second request includes a second access token, the analytics ID and the vendor ID associated with the NFc (510).

2. The method of claim 1, further comprising registering (610) the following information with the NRF (520): the vendor ID associated with the NFc (510); and one or more analytics IDs supported by the NFc (510), including the analytics ID associated with the ML model.

3. The method of any of claims 1-2, further comprising performing (620) a discovery procedure, via the NRF (520), that identifies the first NF (530) as a source of the ML model associated with the analytics ID.

4. A method for a first network function, NF, (530) of a communication network, the method comprising:
receiving (720), from a consumer network function, NFc, (510) of the communication network, a first request for an ML model, wherein the first request includes an analytics identifier, ID, associated with the ML model, a vendor ID associated with the NFc (510), and a first access token that grants the NFc (510) access to the ML model;
authorizing (730) the NFc (510) to access the ML model based on verifying that the analytics ID is included in the first access token;
based on the analytics ID, determining (740) that the ML model needs to be obtained from a second NF (540) of the communication network;
obtaining (750), from a network repository function, NRF, (520) of the communication network, a second access token that authorizes the first NF (530) to obtain the ML model from the second NF (540) on behalf of the NFc (510); and
sending (760), to the second NF (540), a second request for an ML model, wherein the second request includes the second access token, the analytics ID and the vendor ID associated with the NFc (510).

5. The method of claim 4, further comprising registering (710) the following information with the NRF (520): a vendor ID associated with the first NF (530); one or more analytics IDs supported by the first NF (530), including the analytics ID associated with the ML model; and an interoperability ID that corresponds to one or more vendor IDs authorized for the analytics ID.

6. The method of claim 4 or 5, wherein the second access token includes the following: the analytics ID, an NF Instance ID associated with the first NF (530), and an NF Instance ID associated with the NFc (510).

7. A method for a second network function, NF, (540) of a communication network, the method comprising:
receiving (820), from a first NF (530) of the communication network, a request for a machine learning, ML, model owned and/or controlled by the second NF (540), wherein the request includes the following: an analytics identifier, ID, associated with the ML model, a vendor ID associated with a consumer NF,
NFc (510) of the communication network, and a second access token; based on the second access token, authorizing (830) the first NF (530) to access the ML model on behalf of the NFc, (510); and
based on the authorization, sending (850), to the NFc (510), information identifying or describing the ML model.

8. The method of claim 7, wherein the request also includes a vendor ID associated with the first NF (530).

9. The method of any of claims 7 or 8, further comprising registering (810) one or more of the following with a network repository function, NRF, (520) of the communication network:
a vendor ID associated with the second NF (540);
one or more analytics IDs supported by the second NF (540), including the analytics ID associated with the ML model;
an interoperability ID that corresponds to one or more vendor IDs authorized for the analytics ID; and
federated learning, FL, capabilities supported by the second NF (540).

10. A method for a network repository function, NRF, (520) of a communication network, the method comprising:
providing (950), to a consumer network function, NFc, (510), a first access token that grants the NFc (510) access to a machine learning, ML, model associated with the analytics ID, wherein providing (950) the first access token to the NFc (510) comprises:
receiving (951), from the NFc (510), a request for an access token for obtaining the ML model from a first network function, NF, (530), wherein the request for the access token includes a vendor ID associated with the NFc (510), an NF instance ID associated with the NFc (510), an NF type associated with the first NF (530), and the analytics ID associated with the ML model;
determining (952) that the NFc (510) is authorized to access the ML model based on a match or correspondence between the vendor ID associated with the NFc (510) and an interoperability ID in a registered profile for the first NF (530); and
based on the determination, generating (953) the first access token and sending the first access token to the NFc (510); and
providing (960), to the first NF, (530) of the communication network, a second access token that authorizes the first NF (530) to obtain the ML model from a second NF (540) on behalf of a consumer network function, NFc, (510) of the communication network, wherein the ML model associated with an analytics identifier, ID.

11. The method of claim 10, further comprising registering (910) one or more of the following information in a profile for the NFc (510): a vendor ID associated with the NFc (510); and one or more analytics IDs supported by the NFc (510), including the analytics ID associated with the ML model.

12. The method of claim 10 or 11, further comprising registering (920) one or more of the following in a profile for the first NF (530): a vendor ID associated with the first NF (530); one or more analytics IDs supported by the first NF (530), including the analytics ID associated with the ML model; and an interoperability ID that corresponds to one or more vendor IDs authorized for the analytics ID.

13. A consumer network function, NFc, (510) configured for operation in a communication network, the NFc (510) being further configured to perform operations corresponding to any of the methods of claims 1-3.

14. A first network function, NF, (530) configured for operation in a communication network, the first NF (530) being further configured to perform operations corresponding to any of the methods of claims 4-6.

15. A second network function, NF, (540) configured for operation in a communication network, the second NF (540) being further configured to perform operations corresponding to any of the methods of claims 7-9.

16. A network repository function, NRF, (520) configured for operation in a communication network, the NRF (520) being configured to perform operations corresponding to any of the methods of claims 10-12.

17. A non-transitory, computer-readable medium storing computer-executable instructions that, when executed by processing circuitry associated with:
a consumer network function, NFc, (510) configured for operation in a communication network, configure the NFc (510) to perform operations corresponding to any of the methods of claims 1-3;
a first network function, NF, (530) configured for operation in a communication network, configure first NF (530) to perform operations corresponding to any of the methods of claims 4-6;
a second network function, NF, (540) configured for operation in a communication network, configure second NF (540) to perform operations corresponding to any of the methods of claims 7-9; or
a network repository function, NRF, (520) configured for operation in a communication network, configure the NRF (520) to perform operations corresponding to any of the methods of claims 10-12.

18. A computer program product comprising computer-executable instructions that, when executed by processing circuitry associated with:
a consumer network function, NFc, (510) configured for operation in a communication network, configure the NFc (510) to perform operations corresponding to any of the methods of claims 1-3;
a first network function, NF, (530) configured for operation in a communication network, configure first NF (530) to perform operations corresponding to any of the methods of claims 4-6;
a second network function, NF, (540) configured for operation in a communication network, configure second NF (540) to perform operations corresponding to any of the methods of claims 7-9; or
a network repository function, NRF, (520) configured for operation in a communication network, configure the NRF (520) to perform operations corresponding to any of the methods of claims 10-12.

## Patentansprüche

1. Verfahren für eine Verbraucher-Netzwerkfunktion, NFc, (510) eines Kommunikationsnetzes, wobei das Verfahren umfasst:
Erhalten (630) eines ersten Zugriffstokens von einer Netzwerk-Repository-Funktion, NRF, (520) des Kommunikationsnetzes, der der NFc Zugriff auf ein Modell für maschinelles Lernen, ML, gewährt, das mit einer Analytics-Kennung, ID, verbunden ist; Senden (640) einer Anforderung für das ML-Modell an eine erste Netzwerkfunktion, NF, (530) des Kommunikationsnetzes, wobei die Anforderung den ersten Zugriffstoken, die mit dem ML-Modell verbundene Analytics-ID und eine mit der NFc verbundene Anbieter-ID umfasst; und
Empfangen (650) von Informationen, die das ML-Modell identifizieren oder beschreiben, von einer zweiten NF (540) des Kommunikationsnetzes, wobei die zweite NF (540) eine zweite Anforderung für das ML-Modell von der ersten NF (530) empfangen hat, wobei die zweite Anforderung einen zweiten Zugriffstoken, die Analytics-ID und die mit der NFc (510) verbundene Anbieter-ID umfasst.

2. Verfahren nach Anspruch 1, ferner umfassend das Registrieren (610) der folgenden Informationen bei der NRF (520): die mit der NFc (510) verbundene Anbieter-ID; und eine oder mehrere von der NFc (510) unterstützte Analytics-IDs, einschließlich der mit dem ML-Modell verbundenen Analytics-ID.

3. Verfahren nach einem der Ansprüche 1 bis 2, ferner umfassend das Durchführen (620) einer Erkennungsprozedur über die NRF (520), die die erste NF (530) als Quelle des mit der Analytics-ID verbundenen ML-Modells identifiziert.

4. Verfahren für eine erste Netzwerkfunktion, NF, (530) eines Kommunikationsnetzes, wobei das Verfahren umfasst:
Empfangen (720) einer ersten Anforderung für ein ML-Modell von einer Verbraucher-Netzwerkfunktion, NFc, (510) des Kommunikationsnetzes, wobei die erste Anforderung eine mit dem ML-Modell verbundene Analytics-Kennung, ID, eine mit der NFc (510) verbundene Anbieter-ID und einen ersten Zugriffstoken umfasst, der der NFc (510) Zugriff auf das ML-Modell gewährt; Autorisieren (730) der NFc (510) zum Zugriff auf das ML-Modell basierend auf der Überprüfung, dass die Analytics-ID im ersten Zugriffstoken enthalten ist;
basierend auf der Analytics-ID Bestimmen (740), dass das ML-Modell von einer zweiten NF (540) des Kommunikationsnetzes erhalten werden muss;
Erhalten (750) eines zweiten Zugriffstokens von einer Netzwerk-Repository-Funktion, NRF, (520) des Kommunikationsnetzes, der die erste NF (530) autorisiert, das ML-Modell im Namen der NFc (510) von der zweiten NF (540) zu erhalten; und
Senden (760) einer zweiten Anforderung für ein ML-Modell an die zweite NF (540), wobei die zweite Anforderung den zweiten Zugriffstoken, die Analytics-ID und die mit der NFc (510) verbundene Anbieter-ID umfasst.

5. Verfahren nach Anspruch 4, ferner umfassend das Registrieren (710) der folgenden Informationen bei der NRF (520): eine mit der ersten NF (530) verbundene Anbieter-ID; eine oder mehrere von der ersten NF (530) unterstützte Analytics-IDs, einschließlich der mit dem ML-Modell verbundenen Analytics-ID; und eine Interoperabilitäts-ID, die einer oder mehreren für die Analytics-ID autorisierten Anbieter-IDs entspricht.

6. Verfahren nach Anspruch 4 oder 5, wobei der zweite Zugriffstoken Folgendes umfasst: die Analytics-ID, eine mit der ersten NF (530) verbundene NF-Instanz-ID und eine mit der NFc (510) verbundene NF-Instanz-ID.

7. Verfahren für eine zweite Netzwerkfunktion, NF, (540) eines Kommunikationsnetzes, wobei das Verfahren umfasst:
Empfangen (820) einer Anforderung für ein Modell maschinellen Lernens, ML, das der zweiten NF (540) gehört und/oder von ihr kontrolliert wird, von einer ersten NF (530) des Kommunikationsnetzes, wobei die Anforderung Folgendes umfasst:
eine mit dem ML-Modell verbundene Analytics-Kennung, ID, eine mit einer Verbraucher-NF, NFc (510), des Kommunikationsnetzes verbundene Anbieter-ID und einen zweiten Zugriffstoken;
basierend auf dem zweiten Zugriffstoken Autorisieren (830) der ersten NF (530) zum Zugriff auf das ML-Modell im Namen der NFc (510); und
basierend auf der Autorisierung Senden (850) von Informationen, die das ML-Modell identifizieren oder beschreiben, an die NFc (510).

8. Verfahren nach Anspruch 7, wobei die Anforderung auch eine mit der ersten NF (530) verbundene Anbieter-ID umfasst.

9. Verfahren nach einem der Ansprüche 7 oder 8, ferner umfassend das Registrieren (810) eines oder mehrerer der folgenden Elemente bei einer Netzwerk-Repository-Funktion, NRF, (520) des Kommunikationsnetzes:
eine mit der zweiten NF (540) verbundene Anbieter-ID;
eine oder mehrere von der zweiten NF (540) unterstützte Analytics-IDs, einschließlich der mit dem ML-Modell verbundenen Analytics-ID;
eine Interoperabilitäts-ID, die einer oder mehreren für die Analytics-ID autorisierten Anbieter-IDs entspricht; und
von der zweiten NF (540) unterstützte Funktionalitäten für Federated Learning, FL.

10. Verfahren für eine Netzwerk-Repository-Funktion, NRF, (520) eines Kommunikationsnetzes, wobei das Verfahren umfasst:
Bereitstellen (950) eines ersten Zugriffstokens für eine Verbraucher-Netzwerkfunktion, NFc, (510), der der NFc (510) Zugriff auf ein Modell für maschinellen Lernen, ML, gewährt, das mit der Analytics-ID verbunden ist, wobei das Bereitstellen (950) des ersten Zugriffstokens für die NFc (510) umfasst:
Empfangen (951) einer Anforderung für einen Zugriffstoken zum Erhalten des ML-Modells von einer ersten Netzwerkfunktion, NF, (530) von der NFc (510), wobei die Anforderung für den Zugriffstoken eine mit der NFc (510) verbundene Anbieter-ID, eine mit der NFc (510) verbundene NF-Instanz-ID, einen mit der ersten NF (530) verbundenen NF-Typ und die mit dem ML-Modell verbundene Analytics-ID umfasst;
Bestimmen (952), dass die NFc (510) zum Zugriff auf das ML-Modell autorisiert ist, basierend auf einer Übereinstimmung oder Entsprechung zwischen der mit der NFc (510) verbundenen Anbieter-ID und einer Interoperabilitäts-ID in einem registrierten Profil für die erste NF (530); und
basierend auf der Bestimmung Generieren (953) des ersten Zugriffstokens und Senden des ersten Zugriffstokens an die NFc (510); und
Bereitstellen (960) eines zweiten Zugriffstokens für die erste NF (530) des Kommunikationsnetzes, der die erste NF (530) autorisiert, das ML-Modell im Namen einer Verbraucher-Netzwerkfunktion, NFc, (510) des Kommunikationsnetzes von einer zweiten NF (540) zu erhalten, wobei das ML-Modell mit einer Analytics-Kennung, ID, verbunden ist.

11. Verfahren nach Anspruch 10, ferner umfassend das Registrieren (910) einer oder mehrerer der folgenden Informationen in einem Profil für die NFc (510): eine mit der NFc (510) verbundene Anbieter-ID; und eine oder mehrere von der NFc (510) unterstützte Analytics-IDs, einschließlich der mit dem ML-Modell verbundenen Analytics-ID.

12. Verfahren nach Anspruch 10 oder 11, ferner umfassend das Registrieren (920) eines oder mehrerer des Folgenden in einem Profil für die erste NF (530): eine mit der ersten NF (530) verbundene Anbieter-ID; eine oder mehrere von der ersten NF (530) unterstützte Analytics-IDs, einschließlich der mit dem ML-Modell verbundenen Analytics-ID; und eine Interoperabilitäts-ID, die einer oder mehreren für die Analytics-ID autorisierten Anbieter-IDs entspricht.

13. Verbraucher-Netzwerkfunktion, NFc, (510), die für den Betrieb in einem Kommunikationsnetz konfiguriert ist, wobei die NFc (510) ferner dazu konfiguriert ist, Operationen durchzuführen, die einem der Verfahren nach den Ansprüchen 1 bis 3 entsprechen.

14. Erste Netzwerkfunktion, NF, (530), die für den Betrieb in einem Kommunikationsnetz konfiguriert ist, wobei die erste NF (530) ferner dazu konfiguriert ist, Operationen durchzuführen, die einem der Verfahren nach den Ansprüchen 4 bis 6 entsprechen.

15. Zweite Netzwerkfunktion, NF, (540), die für den Betrieb in einem Kommunikationsnetz konfiguriert ist, wobei die zweite NF (540) ferner dazu konfiguriert ist, Operationen durchzuführen, die einem der Verfahren nach den Ansprüchen 7 bis 9 entsprechen.

16. Netzwerk-Repository-Funktion, NRF, (520), die für den Betrieb in einem Kommunikationsnetz konfiguriert ist, wobei die NRF (520) dazu konfiguriert ist, Operationen durchzuführen, die einem der Verfahren nach den Ansprüchen 10 bis 12 entsprechen.

17. Nichtflüchtiges, computerlesbares Medium, das computerausführbare Anweisungen speichert, die, wenn sie durch Verarbeitungsschaltkreise ausgeführt werden, die verbunden sind mit:
einer Verbraucher-Netzwerkfunktion, NFc, (510), die für den Betrieb in einem Kommunikationsnetz konfiguriert ist, die NFc (510) konfigurieren, Operationen durchzuführen, die einem der Verfahren nach den Ansprüchen 1 bis 3 entsprechen;
einer ersten Netzwerkfunktion, NF, (530), die für den Betrieb in einem Kommunikationsnetz konfiguriert ist, die erste NF (530) konfigurieren, Operationen durchzuführen, die einem der Verfahren nach den Ansprüchen 4 bis 6 entsprechen;
einer zweiten Netzwerkfunktion, NF, (540), die für den Betrieb in einem Kommunikationsnetz konfiguriert ist, die zweite NF (540) konfigurieren, Operationen durchzuführen, die einem der Verfahren nach den Ansprüchen 7 bis 9 entsprechen; oder
einer Netzwerk-Repository-Funktion, NRF, (520), die für den Betrieb in einem Kommunikationsnetz konfiguriert ist, die NRF (520) konfigurieren, Operationen durchzuführen, die einem der Verfahren nach den Ansprüchen 10 bis 12 entsprechen.

18. Computerprogrammprodukt, das computerausführbare Anweisungen umfasst, die, wenn sie durch Verarbeitungsschaltkreise ausgeführt werden, die verbunden sind mit:
einer Verbraucher-Netzwerkfunktion, NFc, (510), die für den Betrieb in einem Kommunikationsnetz konfiguriert ist, die NFc (510) konfigurieren, Operationen durchzuführen, die einem der Verfahren nach den Ansprüchen 1 bis 3 entsprechen;
einer ersten Netzwerkfunktion, NF, (530), die für den Betrieb in einem Kommunikationsnetz konfiguriert ist, die erste NF (530) konfigurieren, Operationen durchzuführen, die einem der Verfahren nach den Ansprüchen 4 bis 6 entsprechen;
einer zweiten Netzwerkfunktion, NF, (540), die für den Betrieb in einem Kommunikationsnetz konfiguriert ist, die zweite NF (540) konfigurieren, Operationen durchzuführen, die einem der Verfahren nach den Ansprüchen 7 bis 9 entsprechen; oder
einer Netzwerk-Repository-Funktion, NRF, (520), die für den Betrieb in einem Kommunikationsnetz konfiguriert ist, die NRF (520) konfigurieren, Operationen durchzuführen, die einem der Verfahren nach den Ansprüchen 10 bis 12 entsprechen.

## Revendications

1. Procédé destiné à une fonction de réseau consommateur (NFc) (510) d'un réseau de communication, le procédé comprenant les étapes consistant à :
obtenir (630), à partir d'une fonction de référentiel de réseau (NRF) (520) du réseau de communication, un premier jeton d'accès qui accorde à la NFc un accès à un modèle d'apprentissage automatique (ML) associé à un identifiant (ID) d'analyse ;
envoyer (640), à une première fonction de réseau (NF) (530) du réseau de communication, une demande concernant le modèle ML, la demande comprenant le premier jeton d'accès, l'ID d'analyse associé au modèle ML, et un ID de fournisseur associé à la NFc ; et
recevoir (650), en provenance d'une seconde NF (540) du réseau de communication, des informations identifiant ou décrivant le modèle ML, la seconde NF (540) ayant reçu une seconde demande, en provenance de la première NF (530), concernant le modèle ML, la seconde demande comprenant un second jeton d'accès, l'ID d'analyse et l'ID de fournisseur associé à la NFc (510).

2. Procédé selon la revendication 1, comprenant en outre l'étape consistant à enregistrer (610) les informations suivantes auprès de la NRF (520) : l'ID de fournisseur associé à la NFc (510) ; et au moins un ID d'analyse pris en charge par la NFc (510), y compris l'ID d'analyse associé au modèle ML.

3. Procédé selon l'une quelconque des revendications 1 et 2, comprenant en outre l'étape consistant à réaliser (620) une procédure de découverte, par l'intermédiaire de la NRF (520), identifiant la première NF (530) comme source du modèle ML associé à l'ID d'analyse.

4. Procédé destiné à une première fonction de réseau (NF) (530) d'un réseau de communication, le procédé comprenant les étapes consistant à :
recevoir (720), en provenance d'une fonction de réseau consommateur (NFc) (510) du réseau de communication, une première demande concernant un modèle ML, la première demande comprenant un identifiant (ID) d'analyse associé au modèle ML, un ID de fournisseur associé à la NFc (510), et un premier jeton d'accès qui accorde à la NFc (510) un accès au modèle ML ;
autoriser (730) la NFc (510) à accéder au modèle ML sur la base d'une vérification du fait que l'ID d'analyse est inclus dans le premier jeton d'accès ;
déterminer (740), sur la base de l'ID d'analyse, que le modèle ML doit être obtenu à partir d'une seconde NF (540) du réseau de communication ;
obtenir (750), à partir d'une fonction de référentiel de réseau (NRF) (520) du réseau de communication, un second jeton d'accès qui autorise la première NF (530) à obtenir le modèle ML à partir de la seconde NF (540) pour le compte de la NFc (510) ; et
envoyer (760), à la seconde NF (540), une seconde demande concernant un modèle ML, la seconde demande comprenant le second jeton d'accès, l'ID d'analyse et l'ID de fournisseur associé à la NFc (510).

5. Procédé selon la revendication 4, comprenant en outre l'étape consistant à enregistrer (710) les informations suivantes auprès de la NRF (520) : un ID de fournisseur associé à la première NF (530) ; au moins un ID d'analyse pris en charge par la première NF (530), y compris l'ID d'analyse associé au modèle ML ; et un ID d'interopérabilité qui correspond à au moins un ID de fournisseur autorisé pour l'ID d'analyse.

6. Procédé selon la revendication 4 ou 5, dans lequel le second jeton d'accès comprend les éléments suivants : l'ID d'analyse, un ID d'instance de NF associé à la première NF (530), et un ID d'instance de NF associé à la NFc (510).

7. Procédé destiné à une seconde fonction de réseau (NF) (540) d'un réseau de communication, le procédé comprenant les étapes consistant à :
recevoir (820), en provenance d'une première NF (530) du réseau de communication, une demande concernant un modèle d'apprentissage automatique (ML) détenu et/ou commandé par la seconde NF (540), la demande comprenant les éléments suivants :
un identifiant (ID) d'analyse associé au modèle ML, un ID de fournisseur associé à une NF de consommateur (NFc) (510) du réseau de communication, et un second jeton d'accès ;
sur la base du second jeton d'accès, autoriser (830) la première NF (530) à accéder au modèle ML pour le compte de la NFc (510) ; et
sur la base de l'autorisation, envoyer (850), à la NFc (510), des informations identifiant ou décrivant le modèle ML.

8. Procédé selon la revendication 7, dans lequel la demande comprend également un ID de fournisseur associé à la première NF (530).

9. Procédé selon l'une quelconque des revendications 7 et 8, comprenant en outre l'étape consistant à enregistrer (810) au moins l'un des éléments suivants auprès d'une fonction de référentiel de réseau (NRF) (520) du réseau de communication :
un ID de fournisseur associé à la seconde NF (540) ;
au moins un ID d'analyse pris en charge par la seconde NF (540), y compris l'ID d'analyse associé au modèle ML ;
un ID d'interopérabilité qui correspond à au moins un ID de fournisseur autorisé pour l'ID d'analyse ; et
des capacités d'apprentissage fédéré (FL) prises en charge par la seconde NF (540).

10. Procédé destiné à une fonction de référentiel de réseau (NRF) (520) d'un réseau de communication, le procédé comprenant les étapes consistant à :
fournir (950), à une fonction de réseau consommateur (NFc) (510), un premier jeton d'accès qui accorde à la NFc (510) un accès à un modèle d'apprentissage automatique (ML) associé à l'ID d'analyse, l'étape consistant à fournir (950) le premier jeton d'accès à la NFc (510) comprenant les étapes consistant à :
recevoir (951), en provenance de la NFc (510), une demande concernant un jeton d'accès pour obtenir le modèle ML à partir d'une première fonction de réseau (NF) (530), la demande concernant le jeton d'accès comprenant un ID de fournisseur associé à la NFc (510), un ID d'instance de NF associé à la NFc (510), un type de NF associé à la première NF (530), et l'ID d'analyse associé au modèle ML ;
déterminer (952) que la NFc (510) est autorisée à accéder au modèle ML sur la base d'une correspondance ou d'une concordance entre l'ID de fournisseur associé à la NFc (510) et un ID d'interopérabilité figurant dans un profil enregistré pour la première NF (530) ; et
sur la base de la détermination, générer (953) le premier jeton d'accès et envoyer le premier jeton d'accès à la NFc (510) ; et fournir (960), à la première NF (530) du réseau de communication, un second jeton d'accès qui autorise la première NF (530) à obtenir le modèle ML à partir d'une seconde NF (540) pour le compte d'une fonction de réseau consommateur (NFc) (510) du réseau de communication, dans lequel le modèle ML est associé à un identifiant (ID) d'analyse.

11. Procédé selon la revendication 10, comprenant en outre l'étape consistant à enregistrer (910) au moins l'une des informations suivantes dans un profil pour la NFc (510) : un ID de fournisseur associé à la NFc (510) ; et au moins un ID d'analyse pris en charge par la NFc (510), y compris l'ID d'analyse associé au modèle ML.

12. Procédé selon la revendication 10 ou 11, comprenant en outre l'étape consistant à enregistrer (920) au moins l'un des éléments suivants dans un profil pour la première NF (530) : un ID de fournisseur associé à la première NF (530) ; au moins un ID d'analyse pris en charge par la première NF (530), y compris l'ID d'analyse associé au modèle ML ; et un ID d'interopérabilité qui correspond à au moins un ID de fournisseur autorisé pour l'ID d'analyse.

13. Fonction de réseau consommateur (NFc) (510) configurée pour fonctionner dans un réseau de communication, la NFc (510) étant en outre configurée pour réaliser des opérations correspondant à l'un quelconque des procédés selon les revendications 1 à 3.

14. Première fonction de réseau (NF) (530) configurée pour fonctionner dans un réseau de communication, la première NF (530) étant en outre configurée pour réaliser des opérations correspondant à l'un quelconque des procédés selon les revendications 4 à 6.

15. Seconde fonction de réseau (NF) (540) configurée pour fonctionner dans un réseau de communication, la seconde NF (540) étant en outre configurée pour réaliser des opérations correspondant à l'un quelconque des procédés selon les revendications 7 à 9.

16. Fonction de référentiel de réseau (NRF) (520) configurée pour fonctionner dans un réseau de communication, la NRF (520) étant configurée pour réaliser des opérations correspondant à l'un quelconque des procédés selon les revendications 10 à 12.

17. Support non transitoire lisible par ordinateur stockant des instructions exécutables par ordinateur qui, lorsqu'elles sont exécutées par un circuit de traitement associé à :
une fonction de réseau consommateur (NFc) (510) configurée pour fonctionner dans un réseau de communication, configurent la NFc (510) pour réaliser des opérations correspondant à l'un quelconque des procédés selon les revendications 1 à 3 ;
une première fonction de réseau (NF) (530) configurée pour fonctionner dans un réseau de communication, configurent la première NF (530) pour réaliser des opérations correspondant à l'un quelconque des procédés selon les revendications 4 à 6 ; une seconde fonction de réseau (NF) (540) configurée pour fonctionner dans un réseau de communication, configurent la seconde NF (540) pour réaliser des opérations correspondant à l'un quelconque des procédés selon les revendications 7 à 9 ; ou
une fonction de référentiel de réseau (NRF) (520) configurée pour fonctionner dans un réseau de communication, configurent la NRF (520) pour réaliser des opérations correspondant à l'un quelconque des procédés selon les revendications 10 à 12.

18. Produit de programme informatique comprenant des instructions exécutables par ordinateur qui, lorsqu'elles sont exécutées par un circuit de traitement associé à :
une fonction de réseau consommateur (NFc) (510) configurée pour fonctionner dans un réseau de communication, configurent la NFc (510) pour réaliser des opérations correspondant à l'un quelconque des procédés selon les revendications 1 à 3 ;
une première fonction de réseau (NF) (530) configurée pour fonctionner dans un réseau de communication, configurent la première NF (530) pour réaliser des opérations correspondant à l'un quelconque des procédés selon les revendications 4 à 6 ; une seconde fonction de réseau (NF) (540) configurée pour fonctionner dans un réseau de communication, configurent la seconde NF (540) pour réaliser des opérations correspondant à l'un quelconque des procédés selon les revendications 7 à 9 ; ou
une fonction de référentiel de réseau (NRF) (520) configurée pour fonctionner dans un réseau de communication, configurent la NRF (520) pour réaliser des opérations correspondant à l'un quelconque des procédés selon les revendications 10 à 12.
